# EUROPÄISCHE PATENTSCHRIFT

(11) **EP 4 104 458 B1**
(45) Veröffentlichungstag und Bekanntmachung des Hinweises auf die Patenterteilung: **03.04.2024**
(21) Anmeldenummer: 22707372.3
(22) Anmeldetag: 04.02.2022
(51) Int. Cl.: H04R 25/00

(54) **PLATZSPARENDE MI-ANTENNE FÜR EIN HÖRINSTRUMENT**
SPACE EFFICIENT MAGNETIC-INDUCTIVE ANTENNA FOR HEARING AID
ANTENNE ÉCONOMISANT L'ESPACE MAGNETO INDUCTIVE POUR AIDE AUDITIVE

(30) Priorität: 05.02.2021 DE 102021201095; 09.12.2021 DE 102021214085
(43) Veröffentlichungstag der Anmeldung: 21.12.2022
(73) Patentinhaber: Sivantos Pte. Ltd., Singapore 539775 (SG)
(72) Erfinder: KUHN, Johannes, 90768 Fürth (DE); NIKLES, Peter, 91054 Erlangen (DE)
(74) Vertreter: FDST Patentanwälte
(86) Internationale Anmeldenummer: PCT/EP2022/052741
(87) Internationale Veröffentlichungsnummer: WO 2022/167596

(56) Entgegenhaltungen:
- DE-B3-102017 209 813
- DE-B3-102018 214 199
- DE-U1-202018 104 183

## Beschreibung

Die Erfindung bezieht sich auf eine magnetisch induktive Antenne (kurz: MI-Antenne, also eine Antenne für magnetisch-induktive Nahfeld-Übertragung) nach dem Oberbegriff des Anspruchs 1, für ein Hörinstrument sowie auf ein Hörinstrument mit einer solchen Antenne. Eine solche Antenne ist aus DE 20 2018 104 183 U1 bekannt.

Als Hörinstrument wird allgemein ein elektronisches Gerät bezeichnet, das ein Schallsignal in das Ohr einer das Hörinstrument tragenden Person (auch als "Nutzer" oder "Träger" bezeichnet) abgibt und somit das Hören dieser Person unterstützt. Hierunter fallen im engeren Sinne insbesondere Hörgeräte, die zur Versorgung hörgeschädigter Träger dienen. Solche Hörgeräte nehmen einen Umgebungsschall auf und geben diesen in bearbeiteter, insbesondere frequenzabhängig verstärkter Form als Luft- und/oder Körperschall an den Nutzer ab, wobei sie den Hörverlust des Nutzers ganz oder zumindest teilweise kompensieren. Weitere Hörinstrumente verarbeiten - ähnlich wie klassische Hörgeräte - einen aufgenommenen Umgebungsschall, dienen aber zur Versorgung von normalhörenden Nutzern, um deren Hörvermögen in besonderen Situationen zu schonen (z.B. spezielle schalldämpfende Hörinstrumente für Musiker) oder in sonstiger Weise zu unterstützen. Als Hörinstrumente werden hier um im Folgenden aber auch Geräte verstanden, die ein drahtgebunden oder drahtlos empfangenes Audiosignal in Luft- oder Körperschall umwandeln und in dieser Form an den Nutzer abgeben, z.B. Kopfhörer, Ohrstücke, etc.

Es sind unterschiedliche Bauformen von Hörinstrumenten bekannt. So werden sogenannte "Hinter-dem-Ohr-Geräte" (englisch: Behind-The-Ear", kurz: BTE) zwischen Schädel und Ohrmuschel getragen, wobei das verstärkte Schallsignal mittels eines Schallschlauchs in den Gehörgang der Person eingeleitet wird oder mittels eines in dem Ohrkanal sitzenden Schallwandlers (auch als "Hörer" oder "Receiver" bezeichnet) ausgeben wird. Eine weitere Ausführung eines Hörinstruments ist ein "Im-Ohr-Gerät" (englisch: In-The-Ear, kurz: ITE), bei dem das gesamte Hörhilfegerät selbst in das Ohr, insbesondere in den Gehörgang eingebracht wird. Des Weiteren gibt es Hörinstrumente, die die Schallinformation in Form von Körperschall übertragen oder den Hörnerv direkt stimulieren.

Magnetisch induktive Nahfeld-Übertragung wird bei Hörinstrumenten alternativ zu klassischen Funkübertragungstechniken (z.B. Bluetooth) für die drahtlose Übertragung von Daten, insbesondere Audiosignalen, mit externen Geräten verwendet. Insbesondere wird magnetisch induktive Nahfeld-Übertragung häufig für die Kommunikation zweier Hörinstrumente eines binauralen Hörsystems eingesetzt. Des Weiteren werden magnetisch-induktive Verfahren auch zur Energieübertragung, also zum drahtlosen Laden wiederaufladbarer Batterien in Hörinstrumenten verwendet.

Bisher werden die hierfür (also zur magnetisch-induktiven Daten- und/oder Energieübertragung) erforderlichen MI-Antennen regelmäßig durch Bewicklung eines Ferritkerns mit einer Antennenwicklung (auch als Spule oder coil bezeichnet) hergestellt. Die Antennenleistung lässt sich hier durch größere Ferritkerne, spezielle Bewicklung und besondere Ferritmaterialien steigern. Aufgrund des beengten Bauraums, der empfindlichen (und damit störanfälligen) Elektronik in Hörinstrumenten und dem Wunsch nach möglichst geringem Gewicht sind der Leistungssteigerung herkömmlicher MI-Antennen für den Einsatz in Hörinstrumenten aber enge Grenzen gesetzt.

In WO 2017/153274 A1 ist ein Konzept für eine alternative Bauform einer MI-Antenne beschrieben, bei dem der Querschnitt eines mit einer Antennenwicklung bewickelten Spulenkerns (Basis) durch flächige magnetische Folien erweitert ist. Bei dieser Folienantenne sind die durch die Folien gebildeten Antennenflächen (dort als "Schirme" bezeichnet) etwa orthogonal zu der Achse dieser Basis ausgerichtet. Die Antennenflächen sind an den einander zugewandten Innenseiten optional mit einer para- oder diamagnetischen Schicht versehen, durch die der zwischen den Antennenflächen gebildete Innenraum magnetisch abgeschirmt wird. In dem Innenraum zwischen den Antennenflächen können daher elektrische oder elektronische Komponenten des Hörgeräts (z.B. die Batterie) bauraumsparend untergebracht werden.

Weiterentwicklungen dieser Antennenbauform sind in der DE 10 2018 209 189 A1 und der (den Oberbegriff des Anspruchs 1 abbildenden) DE 20 2018 104 183 U1 offenbart. Gemäß DE 10 2018 209 189 A1 sind die von der Basis abgewinkelten Antennenflächen teilweise zu seitlichen Spulenkernabschnitten ausgebildet, die die Basis beidseitig flankieren und jeweils eine weitere Spule tragen. Die Antennenwicklung umfasst hier somit drei hinsichtlich ihrer Achsen zueinander abgewinkelte Spulen. Gemäß DE 20 2018 104 183 U1 ist die die Antennenwicklung bildende magnetische Spule in eine flexible Leiterplatte integriert. Diese Leiterplatte ist mit zwei Leiterschichten versehen, die die magnetische Folie sandwichartig zwischen sich aufnehmen. Die beiden Leiterschichten sind jeweils in eine Vielzahl von Leiterbahnen gegliedert, wobei einander gegenüberliegende Leiterbahnen der beiden Leiterschichten zur Bildung der Antennenwicklung über Durchkontaktierungen (Vias) miteinander elektrisch verbunden sind.

Aus EP 3 614 494 A1 ist eine weitere Variante einer Folienantenne bekannt. Hierbei sind die Antennenflächen aus voneinander getrennten magnetischen Folienzuschnitten gebildet. Die mit der Antennenwicklung bewickelte Basis weist an ihren beiden Stirnseiten jeweils eine Öffnung auf, in die jeweils einer der Folienzuschnitte eingesteckt ist.

Der Erfindung liegt die Aufgabe zugrunde, eine Antenne für ein Hörinstrument insbesondere unter herstellungstechnischen Aspekten weiter zu verbessern. Insbesondere soll die Antenne besonders unaufwändig und preisgünstig herstellbar sein.

Diese Aufgabe wird erfindungsgemäß gelöst durch eine Antenne mit den Merkmalen des Anspruchs 1. Vorteilhafte Ausgestaltungsformen der Erfindung sind in den Unteransprüchen und der nachfolgenden Beschreibung dargelegt.

Die erfindungsgemäße Antenne ist zum Einsatz in einem Hörinstrument, insbesondere einem Hörgerät, vorgesehen und geeignet. Bei der Antenne handelt es sich um eine magnetisch induktive Antenne (MI-Antenne), die für Daten- und/oder Energieübertragung im magnetischen Nahfeld, insbesondere bei Frequenzen bis ungefähr 300 MHz (Megahertz) eingerichtet ist. Die Antenne weist eine erste Antennenfläche und eine zweite Antennenfläche auf, die jeweils aus magnetischer, flexibler Folie, insbesondere einer Ferritfolie, gebildet sind.

Die Antenne weist weiterhin eine Basis auf, die aus einem magnetischen Material gebildet ist oder zumindest eine magnetische Schicht umfasst. Die Basis ist zwischen den beiden Antennenflächen angeordnet und verbindet die beiden Antennenflächen mechanisch und magnetisch miteinander. Die beiden Antennenflächen sind dabei von der Basis in gleicher Richtung abgewinkelt, so dass die Basis zusammen mit den beiden Antennenflächen etwa die Form eines Buchstabens "U" bildet. Die (Knick-)Linien, entlang welcher die beiden Antennenflächen von der Basis abgewinkelt sind, sind nachfolgend auch als die "stirnseitigen Kanten" der Basis bezeichnet. Die beiden Antennenflächen und die Basis umschließen dabei von drei Seiten ein (auch als "Innenraum" bezeichnetes) Raumvolumen. Die diesem Innenraum zugewandten Seiten der beiden Antennenflächen und der Basis werden jeweils als "Innenseiten" bezeichnet. Die zu diesen Innenseiten jeweils entgegengesetzten Seiten der beiden Antennenflächen und der Basis werden als "Außenseiten" bezeichnet. Die Begriff "innenseitig" und "außenseitig" werden entsprechend verwendet. Die beiden Antennenflächen sind insbesondere (aber nicht zwingend) rechtwinklig von der Basis abgewinkelt, so dass sich die Antennenflächen zueinander parallel diesseits und jenseits des Innenraums gegenüberstehen. Die beiden Antennenflächen sind vorzugsweise zueinander symmetrisch ausgebildet.

Die Antenne umfasst schließlich eine Antennenwicklung.

Soweit gleicht die erfindungsgemäße Antenne einer Folienantenne, wie sie aus dem vorstehend beschriebenen Stand der Technik an sich bekannt ist. Im Unterscheid zu den bekannten Folienantennen ist bei der erfindungsgemäßen Antenne die Antennenwicklung aber nicht um die Basis gewickelt. Vielmehr weist die Antennenwicklung gemäß der Erfindung mindestens eine erste einlagige Spiralspule auf. Diese erste Spiralspule ist außenseitig an der ersten Antennenfläche angeordnet, so dass eine (Spulen-)Achse der ersten Spiralspule senkrecht bezüglich der ersten Antennenfläche ausgerichtet ist. Die Spiralspule ist insbesondere an der ersten Antennenfläche angebracht, insbesondere (direkt oder indirekt) mit der ersten Antennenfläche verklebt.

Als einlagige Spiralspule wird hier um im Folgenden eine Magnetspule in Form einer flachen (z.B. runden, polygonalen oder unregelmäßig geformten) Spirale verstanden, bei der sich der Spulendraht oder -leiter in mehr als einer Windung mit sich änderndem Durchmesser innerhalb derselben Fläche windet. In bestimmten Ausführungen der Erfindung besteht die Antennenwicklung ausschließlich aus der ersten Spiralspule. Um bei gegebener Größe der Antenne ein höhere Antenneneffizienz zu erreichen, umfasst die Antennenwicklung in zweckmäßigen Ausführungsformen der Erfindung aber mindestens eine weitere Spiralspule.

So ist in einer Variante der Erfindung zusätzlich zu der ersten Spiralspule eine zweite einlagige Spiralspule vorgesehen, die außenseitig an der zweiten Antennenfläche anordnet ist, insbesondere angebracht ist, so dass eine Achse dieser zweiten Spiralspule senkrecht bezüglich der zweiten Antennenfläche ausgerichtet ist. Die zweite Spiralspule ist in zweckmäßigen Ausführungen baugleich zu der ersten Spiralspule ausgeführt und/oder bezüglich der letzteren zentriert (d.h. koaxial bezüglich der beiden Spulenachsen) angeordnet.

Alternativ oder zusätzlich zu der zweiten Spiralspule umfasst die Antenne in einer weiteren Variante der Erfindung mindestens eine dritte einlagige Spiralspule, die außenseitig und - bezüglich der Spiralebene - parallel zu der ersten Spiralspule an der ersten Antennenfläche anordnet, insbesondere angebracht ist. Auch die dritte Spiralspule ist in zweckmäßigen Ausführungen baugleich zu der ersten Spiralspule ausgeführt und/oder bezüglich der letzteren zentriert (also wiederum koaxial bezüglich der beiden Spulenachsen) angeordnet.

Im Rahmen der Erfindung kann die Antenne weitere zweite oder dritte Spiralspulen enthalten, die die zweite bzw. erste Antennenfläche flankieren. Die Begriffe "zweite" Spiralspule und "dritte" Spiralspule dienen somit lediglich der eindeutigen Kennzeichnung der jeweiligen Spiralspule hinsichtlich ihrer Anordnung relativ zu der ersten Spiralspule, nicht aber der Abzählung der Spiralspulen. Entsprechend kann die Antenne in bestimmten Ausführungen der Erfindung auch nur die erste Spiralspule und eine oder mehrere dritte Spiralspulen aufweisen, aber keine zweite Spiralspule.

Die gegebenenfalls vorhandenen mehreren einlagigen Spiralspulen können im Rahmen der Erfindung miteinander fest verschaltet (insbesondere elektrisch in Reihe geschaltet) sein und somit zusammen eine mehrlagige Antennenwicklung bilden. In einer besonders vorteilhaften Ausführung der Erfindung sind beiden Spiralspulen oder mindestens zwei von gegebenenfalls mehreren Spiralspulen aber unabhängig voneinander ansteuerbar, d.h. mit einem korrespondierenden Schaltkreis zu Senden oder Empfangen eines Signal bzw. zur Zuführung oder Entnahme von Energie gekoppelt. Die unabhängige Ansteuerung von mindesten zwei Spiralspulen ermöglicht einerseits eine vorübergehende Erhöhung der Sendeleistung der Antenne durch Abschalten einer Spiralspule und damit einhergehende Erhöhung der Stromstärke des Wicklungsstroms. Die unabhängige Ansteuerung von mindesten zwei Spiralspulen ermöglicht andererseits eine vorübergehende Erhöhung der Antenneneffizienz durch Zuschaltung einer Spiralspule.

In vorteilhaften Ausführungsformen der Erfindung ist die oder jede Spiralspule in RFID-Technologie (d.h. nach Art der Antennenspule eines RFID-Transponders) hergestellt. Die Spiralspule ist dabei insbesondere durch Drucken, galvanische Abscheidung, Aufdampfen, Sputtern, Ätzen von Leiterbahnen oder durch Einbetten eines Spulendrahtes auf einer Trägerfolie erzeugt. Die Nutzung der RFID-Technologie zur Herstellung der oder jeder Spiralspule hat den Vorteil, dass sich auf diese Weise die oder jede Spiralspule besonders unaufwändig und preisgünstig herstellen lässt.

In einer ebenfalls zweckmäßigen Alternative ist die oder jede Spiralspule durch eine Leiterbahn einer flexiblen Leiterplatte gebildet. Dies hat insbesondere den Vorteil, dass sich die Spiralspule vergleichsweise einfach integral mit einer zugehörigen Ansteuerelektronik sowie optional auch mit der in der Regel ohnehin vorhandenen Signalverarbeitung des Hörinstruments herstellen lässt.

In einer wiederum alternativen Ausführungsform ist die oder jede Spiralspule Spulen als Luftspule ausgebildet, bei der mehrere Windungen eines isolierten (insbesondere lackisolierten) Wicklungsdrahts unmittelbar aufeinandergewickelt sind. Die Windungen sind dabei vorzugsweise durch eine Lackschicht (insbesondere durch den zur elektrischen Isolierung dienenden Lack) aneinander fixiert, insbesondere miteinander verbacken. Die Lackschicht bildet dabei insbesondere das einzige Mittel zur gegenseitigen Fixierung der Windungen; eine solche Luftspule weist somit vorzugsweise keine Trägerfolie oder sonstige flächige Trägerstruktur auf. Durch die vorstehend beschriebene Gestaltung der oder jeder Spiralspule als Luftspule lässt sich vorteilhafterweise mit vergleichsweise geringem Aufwand eine besonders große Wicklungsdichte erzielen.

Die oder jede Spiralspule ist vorzugsweise derart gestaltet, dass sie einen vergleichsweise großen zentralen, wicklungsfreien Freiraum umschließt. Der Durchmesser dieses Freiraums nimmt dabei vorzugsweise mehr als 50 % des Außendurchmessers der jeweiligen Spiralspule ein. Durch diese Gestaltung der oder jeder Spiralspule wird eine besonders hohe Windungskonzentration im Außenbereich der jeweiligen Spiralspule erzielt. Bei gegebener Windungszahl wird somit - im Vergleich zu eine Spiralspule, die einen kleineren windungsfreien Freiraum umschließt - eine besonders große effektive Fläche und somit eine besonders hohe Sensitivität (Performance) der Antenne erzielt.

In vorteilhaften Ausführungen der Antenne ist die oder jede Spiralspule derart gestaltet, dass ihr Außendurchmesser größer ist als der Außendurchmesser der zugeordneten Antennenfläche. Mit anderen Worten ragt die oder jede Spiralspule vorzugsweise seitlich über die jeweils zugeordnete Antennenfläche hinaus. Durch diese Überdimensionierung der oder jeder Spiralspule im Vergleich zu der jeweils zugeordneten Antennenfläche wird wiederum eine besonders hohe Sensitivität der Antenne erzielt.

In zweckmäßigen Ausführungsformen der Antenne ist die Ferritfolie derart gestaltet, dass von dem Außenumfang mindestens einer der beiden Antennenflächen mehrere um den Umfang der jeweiligen Antennenfläche verteilte Ausformungen (Radialstege) abstehen. Sofern die oder jede Spiralspule - wie vorstehend beschrieben - seitlich über den Rand der zugeordneten Antennenfläche hinausragt, dienen diese Radialstege zur mechanischen Stabilisierung der Spule. Dies ist insbesondere dann vorteilhaft, wenn die Spiralspule unmittelbar auf der Antennenfläche fixiert und nicht durch eine Trägerfolie oder eine Reflexionsfolie unterstützt wird. Zusätzlich oder alternativ werden die Radialstege zur Fixierung der Antenne an einem Strukturbauteil des Hörinstruments, z.B. einem Gehäuse oder einem darin eingesetzten Elektronikrahmen verwendet.

Grundsätzlich können die beiden Antennenflächen aus separaten Folienstücken gebildet sein. Im Sinne einer weiteren Vereinfachung der Herstellung sowie zur Erzielung einer besonders hohen Antenneneffizienz sind die beiden Antennenflächen und die Basis aber vorzugsweise durch einen einstückigen Folienzuschnitt der magnetischen Folie gebildet. Alternativ hierzu sind die beiden Antennenflächen und die Basis durch zwei jeweils in den Bereich der Basis hineinragenden Folienzuschnitte der magnetischen Folie gebildet.

Analog zu den aus dem Stand der Technik bekannten Folienantennen sind die beiden Antennenflächen vorzugsweise jeweils gegenüber der Basis verbreitert. Insbesondere weisen die beiden Antennenflächen dabei jeweils eine kreisförmige Verbreiterung auf, wie sich von den in EP 3 614 494 A1 offenbarten Antennen an sich bekannt ist.

Um das Magnetfeld der Antenne günstig zu formen und somit die Effizienz der Antenne unter Berücksichtigung eines begrenzten Bauraums und/oder Höchstgewichts der Antenne signifikant zu erhöhen, weist die Antenne bevorzugt eine erste magnetische Reflexionsschicht aus einem elektrisch leitenden Material mit geringer magnetischer Permeabilität auf. Diese erste Reflexionsschicht besteht insbesondere aus Kupfer oder Aluminium, beispielsweise in Form einer Folie oder Beschichtung. Die erste Reflexionsschicht ist dabei jeweils außenseitig an der ersten Antennenfläche und der zweiten Antennenfläche angeordnet, insbesondere angebracht, so dass die erste Reflexionsschicht den Antennenflächen und der oder jeder Spiralspule zwischengeordnet ist. Die oder jede Spiralspule und die jeweils zugeordnete Antennenfläche nehmen die erste Reflexionsfolie somit sandwich-artig zwischen sich auf. Im Bereich einer jeder der beiden Antennenflächen weist die erste Reflexionsschicht dabei jeweils eine Aussparung (d.h. ein Loch) auf, durch die der Magnetfluss gebündelt in die Antennenflächen eingeleitet und aus den Antennenflächen ausgeleitet wird. Die oder jede Spiralspule ist dabei im Bereich einer der beiden Aussparungen angeordnet, insbesondere bezüglich der zugeordneten Aussparung zentriert. Bei Ausführungsformen der Antenne, bei denen nur der ersten Antennenfläche eine oder mehrere Spiralspulen zugeordnet sind, ist die erste Reflexionsschicht an der zweiten Antennenfläche optional weggelassen. Die erste Reflexionsschicht überdeckt in diesem Fall nur die erste Antennenfläche sowie vorzugsweise die Basis.

In zweckmäßiger Ausführung der Erfindung ist die erste Reflexionsschicht derart dimensioniert, dass sie die Antennenflächen seitlich (d.h. quer zu der Achse der oder jeder Spiralspule) überragt. Hierdurch wird eine besonders effektive Feldformung erzielt. Bevorzugt überdeckt die erste Reflexionsschicht zudem nicht nur die beiden Antennenflächen, sondern zusätzlich auch die Basis, um ein unerwünschtes Austreten von magnetischen Streufeldern aus dem magnetischen Material der Basis möglichst zu vermeiden. Insbesondere bildet die erste Reflexionsschicht dabei eine die beiden Antennenflächen und die Basis überdeckende, zusammenhängende Fläche.

Vorzugsweise weist die erste Reflexionsschicht im Bereich einer jeden Antennenfläche an der von der Basis jeweils abgewandten Seite einen Schlitz auf, der sich von der jeweiligen Aussparung bis zum äußeren Rand der ersten Reflexionsschicht erstreckt. Die erste Reflexionsschicht ist infolge des Schlitzes also nicht ringförmig um die Aussparungen geschlossen, wodurch dem Auftreten von störenden Kreisströmen in der ersten Reflexionsschicht entgegengewirkt wird.

Zusätzlich oder alternativ zu der ersten Reflexionsschicht weist die Antenne vorzugsweise eine zweite magnetische Reflexionsschicht aus einem elektrisch leitenden Material mit geringer magnetischer Permeabilität, insbesondere aus Kupfer oder Aluminium, auf. Diese zweite Reflexionsschicht ist dabei jeweils innenseitig an der ersten Antennenfläche und der zweiten Antennenfläche angeordnet, insbesondere angebracht. Auch die zweite magnetische Reflexionsschicht erstreckt sich bevorzugt auch über die Basis und bildet hier zweckmäßigerweise eine die beiden Antennenflächen und die Basis überdeckende, zusammenhängende Fläche.

Die erfindungsgemäße Antenne hat insbesondere den Vorteil, dass sie nur ein sehr geringes Gewicht hat und einen sehr geringen Bauraum benötigt, da sie ausschließlich aus sehr dünnen Folien oder Schichten (nämlich der magnetischen Folie, insbesondere Ferritfolie, der ggf. vorhandenen ersten und/oder zweiten Reflexionsschicht und der mindestens einen Windungsschicht) gebildet ist. Infolge der U-förmigen Struktur, die durch die Antennenflächen und die diese verbindende Basis gebildet ist, schließt die Antenne bei geringem Bauraum aber ein vergleichsweise großes Volumen ein. Infolge dieses großen Volumens hat die Antenne einerseits eine hohe Performanz; insbesondere erzeugt die Antenne hierdurch in angeregtem Zustand einen magnetischen Feldverlauf, der dem einer Stabantenne des gleichen Volumens näherungsweise entspricht. Anders als bei einer solchen Stabantenne ist das umschlossene Volumen aber größtenteils leer und lässt sich daher zur Unterbringung mindestens einer anderen Komponente des Hörinstruments, insbesondere einer Batterie, nutzen. Die Unterbringung der Batterie oder eines anderen Bauteils mit metallischem Gehäuse in dem von der Antenne umschlossenen Innenraum hat dabei den Zusatzeffekt, dass das Metallgehäuse den Magnetfluss innerhalb der magnetischen Folie der Antenne führt und damit die Performanz der Antenne zusätzlich fördert.

Die erfindungsgemäße Antenne hat den weiteren Vorteil, dass sie - auch im Vergleich zu herkömmlichen Folienantennen - infolge der flächigen Ausführung der Spule(n) in RFID-Technologie, auf einer gedruckten Leiterplatte oder als Luftspule(n) sehr unaufwändig und kostengünstig herstellbar ist; die Ausbildung der Spule(n) auf eine gedruckten Leiterplatte hat dabei den zusätzlichen Vorteil, dass die oder jede Spule mit der Signalverarbeitungs- und/oder Steuerelektronik des Hörinstruments in einer gemeinsamen Platine integriert werden können (und vorzugsweise auch integriert sind), wodurch der Montageaufwand für das Hörinstruments verringert wird. Insbesondere entfällt in diesem Fall der Aufwand für das Verlöten oder sonstige Kontaktieren der Antennenwicklung mit dem zugehörigen Sende- und/oder Empfangsschaltkreis bzw. der Ladeelektronik des Hörinstruments.

Ein zusätzlicher Vorteil der erfindungsgemäßen Antenne besteht darin, dass sie in hohem Maße flexibel und damit an die baulichen Randbedingungen in dem Hörinstrument anpassbar ist. So kann die Antenne insbesondere verschiedene Körperformen angepasst werden. Die Windungen der Spule(n) müssen nicht zwingend rund sein. Sie können vielmehr im Rahmen der Erfindung auch andere Formen, insbesondere eckige, ovale, organische Formen oder Kombination dieser Formen (z.B. eine an die Form des Hörinstruments angepasste Kontur) annehmen. Um eine möglichst performante Antenne zu erhalten, wird die Form der Spule(n) dabei vorzugsweise so ausgelegt, dass die Antennenwicklung die maximal zu Verfügung stehende Fläche füllt. Weiterhin kann die Antenne durch Wahl der Anzahl der einlagigen Spiralspulen einfach an die im jeweiligen Anwendungsfall gewünschte Performanz und/oder Induktivität angepasst werden; insbesondere kann zur Hinzufügung einer oder mehrere Spiralspulen auch bei einer nur sehr kleine nutzbaren Fläche eine hohe Performanz bzw. Induktivität der Antenne erreicht werden.

In einer zweckmäßigen Methode zur Montage der Antenne wird zunächst eine der beiden Antennenflächen mit einer Stirnseite an einer Fläche eines in dem Innenraum der Antenne aufzunehmenden Bauteils (insbesondere an einer Stirnfläche der Batterie) angelegt und optional fixiert, insbesondere durch Verklebung. Die Basis und die andere Antennenfläche werden dann um das Bauteil herumgefaltet. Abschließend wird die andere Antennenfläche auf einer gegenüberliegenden Fläche des Bauteils (insbesondere auf der anderen Stirnfläche der Batterie) angelegt und optional fixiert. Diese an sich einfach umzusetzende Montagemethode kann allerdings insofern zu Komplikationen führen, als damit eine präzise Zentrierung der Antennenflächen zueinander und bezüglich des Bauteils vergleichsweise schwierig zu erreichen ist. Dies liegt einerseits an Fertigungstoleranzen der magnetischen Folie und der übrigen Komponenten. Andererseits neigt die magnetische Schicht (insbesondere Ferritschicht) der magnetischen Folie erfahrungsgemäß dazu, beim Falten des Folienzuschnitts um das Bauteil unregelmäßig und irreproduzierbar zu brechen. Die Fertigungsunterschiede der Antenne werden somit durch den oben beschriebenen Montageprozess weiter erhöht, zumal die Freiheitsgrade zur Positionierung der zweiten Antennenfläche an dem Bauteil durch die vorausgegangenen Prozessschritte eingeschränkt wird.

Um eine einfache, gleichzeitig aber präzise und reproduzierbare Montage der Antenne zu ermöglichen, werden in einer Weiterentwicklung der Erfindung mehrere, nachfolgend näher beschriebene Maßnahmen vorgeschlagen, die unabhängig voneinander oder in beliebiger Kombination miteinander eingesetzt werden können.

Gemäß einer ersten der genannten Maßnahmen umfasst die Antenne vorzugsweise zusätzlich einen Führungskörper, der mit einer Führungsfläche an einer dem Innenraum zugewandten Fläche der Basis anliegt. Der Führungskörper, der vorzugsweise durch ein Spritzgießteil aus Kunststoff gebildet ist, liegt also im montierten Zustand der Antenne insbesondere zwischen der Basis und dem in dem Innenraum der Antenne aufgenommenen Bauteil (insbesondere der Batterie) ein. Der Führungskörper unterstützt die Zentrierung der Antenne bezüglich des Bauteils (und damit auch die Zentrierung der Antennenflächen zueinander), da er einen von der Basis ausgehenden (mithin symmetrischen) Montageprozess erleichtert. Vorzugsweise wird dabei die Basis zunächst mit dem Führungskörper verbunden. Der Führungskörper wird dann auf das im Innenraum der Antenne aufzunehmende Bauteil aufgesetzt. Die beiden Antennenflächen werden anschließend beidseitig um das Bauteil geklappt und optional an diesem fixiert. Die Präzision dieses Montageprozesses wird in zweckmäßiger Ausführung dadurch erhöht, dass eine Innenseite des Führungskörpers mit einer zu dem Bauteil komplementären Kontur versehen wird, so dass der Führungskörper passgenau (insbesondere selbstzentrierend) auf das Bauteil aufsetzbar ist.

Um die Reproduzierbarkeit des Faltprozesses, in dem die beiden Antennenflächen von der Basis abgewinkelt werden, zu erhöhen und insbesondere unregelmäßige, irreproduzierbare Brücke der magnetisierbaren Schicht der magnetischen Folie zu vermeiden oder zumindest klein zu halten, ist der Führungskörper vorzugsweise im Bereich der stirnseitigen Kanten der Basis an seiner Führungsfläche jeweils mit einen (zylindrisch) konvexen Führungsradius versehen, über den die magnetische Folie beim Abwinkeln der Antennenflächen von der Basis geführt wird.

Zusätzlich oder alternativ weist der Führungskörper in zweckmäßiger Ausgestaltung mindestens einen von der Führungsfläche abstehenden (z.B. stiftförmigen) Zentriervorsprung auf, der zur Positionierung (Zentrierung) der Basis in einen korrespondierenden Einschnitt oder ein korrespondierendes Loch der Basis eingreift. In einer weiteren zweckmäßigen Ausgestaltung ist der Führungskörper beidseitig der Führungsfläche mit Brüstungsstegen oder Vorsprüngen versehen, zwischen denen die Basis einliegt. Durch diese Gestaltung werden die Basis (und damit mittelbar auch die Antennenflächen) formschlüssig in der Führungsfläche gehalten.

Optional ist der Führungskörper mit weiteren funktionalen Strukturen, z.B. Strukturen zur Fixierung einer Leiterplatte und/oder Strukturen zur Führung von Wicklungsdrähten, versehen.

Gemäß einer zweiten Maßnahme ist vorzugsweise der oder jeder Folienzuschnitt im Bereich zwischen einer der beiden Antennenflächen und der Basis mit einer Sollbiegestelle versehen, indem die magnetische Folie an dieser Stelle durch mindestens eine Vertiefung lokal geschwächt ist. In verschiedenen Varianten sind in die magnetische Folie entweder eine Vielzahl von punktförmige Vertiefungen oder eine oder mehrere linienförmige Vertiefungen oder eine Kombination aus punkt- und linienförmigen Vertiefungen eingebracht. Die Vertiefungen sind insbesondere durch Materialabtrag mittels Laserstrahlung (Laser-Cutting) hergestellt. Die oder jede Vertiefung kann mit verschiedener Tiefe in die magnetische Folie eingebracht werden, vorzugsweise aber derart, dass sie die Folie nicht vollständig durchdringt. Die oder jede Vertiefung ist weiterhin vorzugsweise an der dem Innenraum zugewandten Innenseite der magnetischen Folie eingebracht. Die Vertiefungen liegen somit in dem abgewinkelten Zustand der magnetischen Folie auf der konkaven Seite der Knickstellen und werden somit beim Biegen der magnetischen Folie ganz oder zumindest teilweise durch das Material der Folie wieder zusammengeschoben. Durch die Sollbiegestellen werden unregelmäßige Brüche der magnetisierbaren Schicht vermieden, wodurch wiederum die Fertigungstoleranz bei der Montage der Antenne verringert wird.

Eine dritte Maßnahme zur Erzielung einer einfachen, gleichzeitig aber präzisen und reproduzierbaren Montage der Antenne wird bei Ausführungsformen der Antenne angewandt, bei denen die Antennenflächen und die Basis aus zwei Folienzuschnitten der magnetischen Folie zusammengesetzt sind. Jeder der beiden Folienzuschnitte weist dabei jeweils eine der beiden Antennenflächen auf sowie mindestens eine von dem Rand der jeweiligen Antennenfläche (insbesondere radial) abragende Lasche. Zur Bildung der Basis werden hierbei die oder jeweils einer von gegebenenfalls mehreren Laschen eines der beiden Folienzuschnitte überlappend auf eine (jeweils) korrespondierende Lasche des anderen Folienzuschnitts gelegt.

Die Bildung der Antennenflächen und der Basis aus zwei Folienzuschnitten erlaubt eine unabhängige (und somit besonders präzise) Fixierung beider Antennenflächen an dem im Innenraum der Antenne aufzunehmenden Bauteil. Zudem können Fertigungstoleranzen (sowie auch unterschiedliche Dicken des Bauteils) durch unterschiedlich starke Überlappung der Laschen ausgeglichen werden, ohne dass sich dies nennenswert auf die magnetischen Eigenschaften der Antenne auswirkt. Außerdem sind die beiden Folienabschnitte vorzugsweise identisch gefertigt, wodurch der Fertigungsprozess vereinfacht wird.

Sofern die beiden Folienzuschnitte jeweils mit mehreren Laschen versehen sind, ist die aus diesen Laschen gebildete Basis der Antenne in mehrere unabhängige Stränge geteilt. Die Reihenfolge, in der die Laschen der beiden Folienabschnitte dabei aufeinander aufgelegt werden, wird dabei vorzugsweise abgewechselt. Die mehrsträngige Gestaltung der Basis ermöglicht die Realisierung einer Basis mit einem vergleichsweise großen Querschnitt (und damit eine gute magnetische Kopplung zwischen den beiden Antennenflächen), ohne dass die Basis in radialer Richtung stark über das im Innenraum aufgenommene Bauteil hinausragt. Mit anderen Worten erlaubt die Aufteilung der Basis in mehrere - jeweils aus korrespondierenden Laschen zweier Folienabschnitte gebildete - Stränge, die Basis in einfacher Weise um den Umfang des im Innenraum aufgenommenen Bauteils herumzulegen, so dass bei besonders kompakter Form der Antenne dennoch ein gute magnetische Kopplung zwischen den beiden Antennenflächen erreicht wird. Zudem lassen sich mehrere schmale Laschen erkanntermaßen einfacher und mit geringerem Risiko von unregelmäßigen Brüchen der magnetisierbaren Schicht von der Antennenfläche abwinkeln als eine breitere Lasche mit demselben Gesamtquerschnitt. Die mehreren Stränge der Basis sind vorzugsweise derart zueinander angeordnet, dass sie - im Blick auf eine der Antennenflächen gesehen - zueinander in einem Winkel zwischen 40° bis 180°, vorzugsweise 45°, 90° oder 120°, ausgerichtet sind. Es hat sich gezeigt, dass durch die solchermaßen weit von voneinander entfernten Stränge der Basis - im Vergleich zu einer aus einem einzigen Strang oder zwei eng benachbarten Strängen bestehenden Basis - eine besonders effektive magnetische Kopplung zwischen den beiden Antennenflächen erzielt wird.

Vorzugsweise ist die magnetische Folie der beiden Folienzuschnitte aus einer magnetisierbaren Schicht, insbesondere Ferritschicht oder Ferritpulverschicht, gebildet, die von beiden Seiten (sandwichartig) von einer Kunststoffschicht (insbesondere aus Polyethylenterephthalat, kurz PET) eingefasst ist. In diesem Fall wird in einer zweckmäßigen Ausführung der Erfindung eine der Kunststoffschichten in dem oder jedem Überlappbereich der korrespondierenden Laschen entfernt, so dass die korrespondierenden Laschen jeweils unmittelbar mit der magnetisierbaren Schicht aufeinander liegen. Hierdurch wird die magnetische Kopplung zwischen den Antennenflächen weiter verbessert.

Eine besondere Verkörperung der Erfindung ist ein Hörinstrument, das mit der vorstehend beschriebenen erfindungsgemäßen Antenne, insbesondere in einer der vorstehend beschriebenen Ausführungsformen, ausgestattet ist. Das Hörinstrument weist insbesondere in an sich üblicher Weise - innerhalb oder außerhalb eines Gehäuses - einen Ausgangswandler, z.B. einen Hörer zur Ausgabe eines Schallsignals in das Ohr eines Nutzers auf. Das Hörinstrument weist des Weiteren bevorzugt einen (programmieren, nicht-programmierbaren oder teilweise programmierbaren) Signalprozessor zur Verarbeitung, insbesondere Verstärkung des an den Nutzer auszugebenden Schallsignals auf. Weiterhin weist das Hörinstrument bevorzugt einen Eingangswandler, insbesondere mindestens ein Mikrofon, zur Erfassung eines Umgebungsschalls auf, wobei dieser erfasste Umgebungsschall nach Verarbeitung, insbesondere Verstärkung, über den Ausgangswandler ausgegeben wird.

In zweckmäßigen Ausführungen weist das Hörinstrument ein Funktionsbauteil, z.B. eine (aufladbare oder nicht-aufladbare) Batterie oder einem Hörer, auf wobei dieses Funktionsbauteil mit einem Gehäuse aus einem elektrisch leitenden Material mit geringer magnetischer Permeabilität, insbesondere aus Kupfer, Aluminium oder einem Stahlblech, versehen ist. Die Antenne ist dabei derart auf das Funktionsbauteil aufgesetzt ist, dass das Gehäuse die Antennenflächen (und vorzugsweise auch die Basis) innenseitig dicht flankiert. Das Gehäuse des Funktionsbauteils erfüllt hierdurch die Wirkung der vorstehend beschriebenen zweiten Reflexionsschicht, die deshalb in dieser Ausführungsform obsolet und daher vorzugsweise auch nicht vorhanden ist. Vorzugsweise liegt das Gehäuse an der jeweiligen Innenseite der Antennenflächen und optional auch an der Innenseite der Basis unmittelbar an.

Die erfindungsgemäße Antenne kann im Rahmen der Erfindung grundsätzlich bei beliebigen Hörinstrumenten der eingangs beschriebenen Art, insbesondere auch bei einem Kopfhörer, Ohrstück, etc. vorteilhaft eingesetzt werden. Bevorzugt handelt es sich bei dem erfindungsgemäßen Hörinstrument aber um ein Hörgerät, dass wahlweise zum Beispiel als BTE- oder ITE-Gerät vorliegen kann.

Nachfolgend werden Ausführungsbeispiel der Erfindung anhand einer Zeichnung näher erläutert. Darin zeigen:
- Fig. 1: in schematischer Darstellung ein Hörinstrument, hier in Form eines Hinter-dem-Ohr-Hörgeräts, mit einer Batterie, und einer hierauf aufgesetzten Antenne,
- Fig. 2: in perspektivischer Darstellung die Antenne des Hörgeräts aus Fig. 1, wobei die Antenne eine Ferritfolie, eine außenseitig auf die Ferritfolie aufgebrachte erste Reflexionsfolie und eine wiederum außenseitig auf die erste Reflexionsfolie aufgebrachte Antennenwicklung umfasst, wobei die Antennenwicklung aus einer einlagigen Spiralspule gebildet ist,
- Fig. 3: in Darstellung gemäß Fig. 2 die Antenne in dem auf die Batterie des Hörinstruments aufgesetzten Zustand,
- Fig. 4: in Darstellung gemäß Fig. 3 die Batterie und die Ferritfolie der Antenne,
- Fig. 5: in Darstellung gemäß Fig. 3 die Batterie sowie die Ferritfolie und die erste Reflexionsfolie der Antenne,
- Fig. 6: die Ferritfolie der Antenne in aufgefaltetem Zustand,
- Fig. 7: die erste Reflexionsfolie der Antenne in einer alternativen Ausführungsform, in der auf der ersten Reflexionsfolie zwei jeweils einlagige Spiralfolien der Antennenwicklung aufgebracht sind, wobei die beiden Spiralfolien an zueinander entgegengesetzten Längsenden der ersten Reflexionsfolie aufgebracht sind,
- Fig. 8: in einem schematischen Querschnitt einen Ausschnitt der Batterie und der darauf aufgesetzten Antenne gemäß Fig. 2,
- Fig. 9: in Darstellung gemäß Fig. 8 eine alternative Ausführungsform der Antenne, in der die Antennenwicklung zwei aufeinander angebrachte, jeweils einlagige Spiralspulen umfasst, und
- Fig. 10: in Darstellung gemäß Fig. 8 eine weitere Ausführungsform der Antenne mit einer innenseitig auf der Ferritfolie aufgebrachten zweiten Reflexionsfolie,
- Fig. 11 und 12: in unterschiedlichen perspektivischen Darstellungen eine weitere Ausführungsform der Antenne mit einem Führungskörper zur Führung und Zentrierung der Ferritfolie bezüglich der Batterie,
- Fig. 13: in einem Querschnitt die auf die Batterie aufgesetzte Antenne gemäß Fig. 11,
- Fig. 14 bis 17: jeweils in Draufsicht vier unterschiedliche Ausführungen der Ferritfolie, die hier jeweils in den Bereichen zwischen einer der beiden Antennenflächen und der Basis eine Sollbiegestelle aufweist, in der die Ferritfolie durch eine oder mehrere Vertiefungen lokal geschwächt ist,
- Fig. 18: in einem schematischen Querschnitt die Ferritfolie mit drei unterschiedlich tiefen Vertiefungen einer der Sollbiegestellen, und
- Fig. 19 und 20: in verschiedenen perspektivischen Darstellungen eine Ausführungsform der Antenne, die aus zwei Folienzuschnitten der Ferritfolie zusammengesetzt ist, wobei die Antenne auf die Batterie aufgesetzt ist,
- Fig. 21: in isolierter perspektivischer Darstellung einen Folienzuschnitt der Antenne gemäß Fig. 19,
- Fig. 22 und 23: in perspektivischer Darstellung bzw. in Draufsicht eine Variante der aus zwei Folienzuschnitten gebildeten Antenne,
- Fig. 24: in perspektivischer Darstellung eine weitere Ausführungsform der Antenne in dem auf die Batterie des Hörinstruments aufgesetzten Zustand,
- Fig. 25: in isolierter perspektivischer Darstellung einen Folienzuschnitt der Antenne gemäß Fig. 24,
- Fig. 26: in Draufsicht der Folienzuschnitt aus Fig. 25 in aufgefaltetem Zustand mit einer darauf fixierten Spiralspule der Antenne,
- Fig. 27: in perspektivischer Darstellung eine weitere Ausführungsform der Antenne in dem auf die Batterie des Hörinstruments aufgesetzten Zustand,
- Fig. 28: in isolierter perspektivischer Darstellung einen Folienzuschnitt der Antenne gemäß Fig. 27, und
- Fig. 29: in Draufsicht der Folienzuschnitt aus Fig. 28 in aufgefaltetem Zustand mit einer darauf fixierten Spiralspule der Antenne.

Einander entsprechende Teile sind in allen Figuren stets mit gleichen Bezugszeichen versehen.

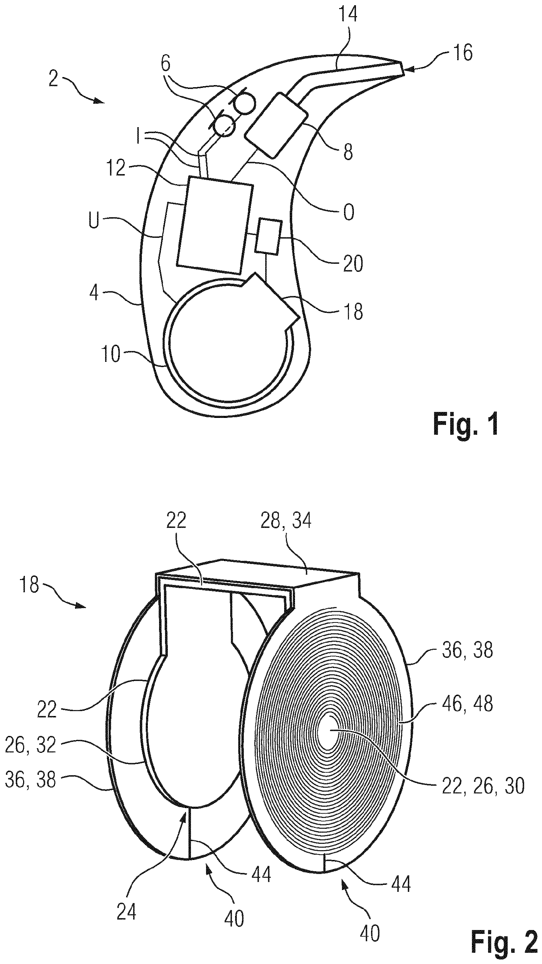

Fig. 1 zeigt ein Hörinstrument, bei dem es sich hier um ein Hörgerät 2 zur Unterstützung des Hörvermögens eines hörgeschädigten Nutzers handelt. Bei dem Hörgerät 2 handelt es sich in dem hier dargestellten Beispiel um ein hinter einem Ohr eines Nutzers tragbares BTE-Hörgerät.

Das Hörgerät 2 umfasst innerhalb eines Gehäuses 4 zwei Mikrofone 6 als Eingangswandler sowie einen Hörer 8 (Receiver) als Ausgangswandler. Das Hörgerät 2 umfasst weiterhin eine Batterie 10 und eine Signalverarbeitung in Form eines Signalprozessors 12. Vorzugsweise umfasst der Signalprozessor 12 sowohl eine programmierbare Untereinheit (zum Beispiel einen Mikroprozessor) als auch eine nicht-programmierbare Untereinheit (zum Beispiel einen ASIC).

Der Signalprozessor 12 wird aus der Batterie 10 mit einer elektrischen Versorgungsspannung U versorgt.

Im Normalbetrieb des Hörgeräts 2 nehmen die Mikrofone 6 jeweils einen Luftschall aus der Umgebung des Hörgeräts 2 auf. Die Mikrofone 6 wandeln den Schall jeweils in ein (Eingangs-)Audiosignal I um, das Information über den aufgenommenen Schall enthält. Die Eingangs-Audiosignale I werden innerhalb des Hörgeräts 2 dem Signalprozessor 12 zugeführt, der diese Eingangs-Audiosignale I, zur Unterstützung des Hörvermögens des Nutzers modifiziert.

Der Signalprozessor 12 gibt ein Ausgangs-Audiosignal O, das Information über den verarbeiteten und somit modifizierten Schall enthält, an den Hörer 8 aus.

Der Hörer 8 wandelt das Ausgangs-Schallsignal O in einen modifizierten Luftschall um. Dieser modifizierte Luftschall wird über einen Schallkanal 14, der den Hörer 8 mit einer Spitze 16 des Gehäuses 4 verbindet, sowie über einen (nicht explizit gezeigten) flexiblen Schallschlauch, der die Spitze 16 mit einem in den Gehörgang des Nutzers eingesetzten Ohrstück verbindet, in den Gehörgang des Nutzers übertragen.

Um mit Peripheriegeräten wie z.B. einem zweiten Hörgerät zur Versorgung des zweiten Ohrs des Nutzers Daten austauschen zu können, umfasst das Hörgerät 2 weiterhin eine Antenne 18. Bei der Antenne 18 handelt es sich um eine MI-Antenne, die magnetisch induktive Nahfeldübertragung zum Datenaustauch nutzt. Zur Ansteuerung der Antenne 18 umfasst das Hörgerät 2 einen damit verbundenen Sende-/Empfangsschaltkreis 20, der einerseits mit der Antenne 18 und andererseits mit dem Signalprozessor 12 des Hörgeräts 2 verbunden ist. Zusätzlich oder alternativ dient die Antenne 18 zur drahtlosen Aufnahme von Energie, um die Batterie 10 zu laden. Die Antenne 18 ist in diesem Fall (ggf. auch) mit einer elektronischen Ladesteuerung des Hörgeräts 2 verbunden, die den Aufladevorgang der Batterie 10 steuert.

Gemäß Fig. 2 umfasst die Antenne 18 anstelle eines massiven Magnetkerns eine magnetische, flexible Folie, hier in Form einer Ferritfolie 22, die eine Stärke von ungefähr 30 bis 400 µm (Mikrometer), vorzugweise 50 bis 300 µm und insbesondere 100 µm aufweist. Wie insbesondere auch aus den Fig. 2, 4 und 6 hervorgeht, ist die Ferritfolie 22 durch einen (bevorzugt einstückigen) hantelförmigen Zuschnitt gebildet. Die Ferritfolie 22 weist somit in dem hier dargestellten Ausführungsbeispiel an ihren einander gegenüberliegenden Längsenden 24 jeweils eine kreisförmige Verbreiterung 26 auf, wobei die beiden Verbreiterungen 26 durch einen schmäleren Verbindungsabschnitt 28 verbunden sind. Zur Bildung der Antenne 18 ist die Ferritfolie 22 zu einer U-förmigen Kontur gefaltet, deren Schenkel durch jeweils eine der beiden Verbreiterungen 26 und ein angrenzendes Stück des Verbindungsabschnitts 28 gebildet sind. Die Schenkel der U-förmigen Kontur, also beiden Verbreiterungen 26 und die jeweils angrenzenden Stücke des Verbindungsabschnitts 28, bilden somit zwei parallel und mit Abstand einander gegenüberliegende Antennenflächen 30 und 32. Der diese beiden Antennenflächen 30 und 32 verbindende Teil des Verbindungsabschnitts 28 wird als Basis 34 bezeichnet.

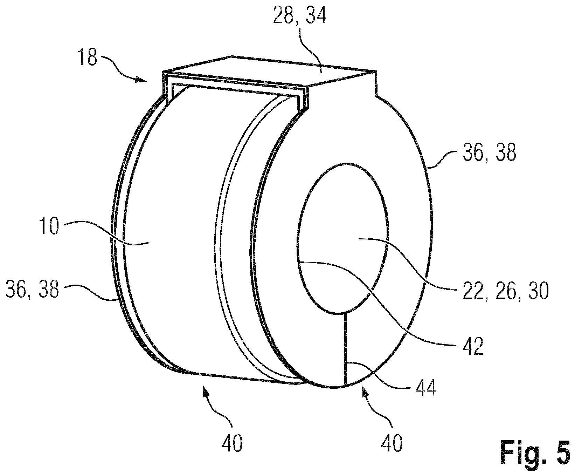

Wie aus den Fig. 2 und 5 ersichtlich ist, ist außenseitig auf die Ferritfolie 22 als erste Reflexionsschicht eine Reflexionsfolie 36 aus Kupfer aufgebracht, die mit der Ferit-Folie 22 vorzugsweise verklebt ist. Die Reflexionsfolie 36 hat eine an die Ferritfolie 22 angepasste Form, im Fall des vorliegenden Beispiels also ebenfalls ein Hantel-Form. Sie ist im Vergleich zu der Ferritfolie 22 jedoch mit größeren Verbreiterungen 38 an ihren Längsenden 40 versehen, so dass die Reflexionsfolie 36 im Bereich der Antennenflächen 30 und 32 seitlich über den Rand der Ferritfolie 22 hinaussteht. Weiterhin ist die Reflexionsfolie 36 im Bereich ihrer Verbreiterungen 38 jeweils mit einer zentralen kreisförmigen Aussparung 42 versehen, so dass die Verbreiterungen 38 jeweils die Form eines Kreisrings haben. An ihren von der Basis 34 abgewandten Seiten (also an den Längsenden 40 der Reflexionsfolie 36) sind die kreisringförmigen Verbreiterungen 38 jeweils durch einen dünnen Schlitz 44 unterbrochen, der sich von der jeweiligen Aussparung 42 bis zum äußeren Rand der Reflexionsfolie 36 erstreckt.

Die Antenne 18 umfasst schließlich eine Antennenwicklung 46. In dem in den Fig. 2 bis 6 und 8 dargestellten Ausführungsbeispiel ist diese Antennenwicklung 46 durch einen einlagige Spiralspule 48 gebildet, die wiederum außenseitig auf die Reflexionsfolie 36 aufgebracht ist. Die Spiralspule 48 ist dabei zentriert bezüglich der Verbreiterung 26 der Ferritfolie 22 und der Verbreiterung 38 der Reflexionsfolie (und somit auch zentriert bezüglich der in die letztere eingebrachten Aussparung 42) angeordnet. Anders als bei den eingangs beschriebenen herkömmlichen Folienantennen ist die Antennenwicklung 46 somit nicht um die Ferritfolie 22 oder einen sonstigen Magnetkern herumgewickelt. Die Spiralspule 48 ist vielmehr bezüglich der Ferritfolie 22 derart angeordnet, dass die Spulenachse 49 (Fig, 3 und 7) der Spiralspule 48 senkrecht auf die Flächenausdehnung der Ferritfolie 22 und somit senkrecht auf die Antennenfläche 30 steht.

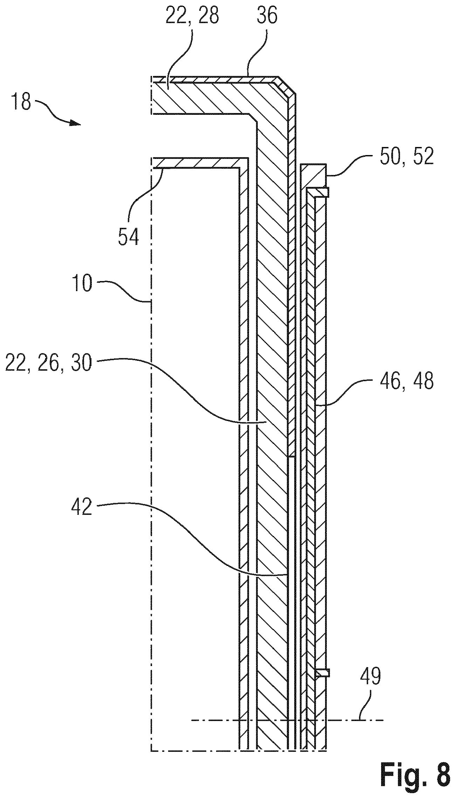

In bevorzugter Ausführung ist die Spiralspule 48 nach Art der Antennenspule eines RFID-Transponders gebildet. Sie ist hierzu insbesondere durch eine auf eine Trägerfolie 50 gedruckte oder in die Trägerfolie 50 eingebettete elektrische Leiterbahn (s. insbesondere Fig. 8) gebildet, wobei diese Trägerfolie 50 vorzugsweise auf der Reflexionsfolie 36 aufgeklebt ist. Die mit der Spiralspule 48 versehene Trägerfolie 50 ist zusammenfassend auch als Wicklungsfolie 52 bezeichnet.

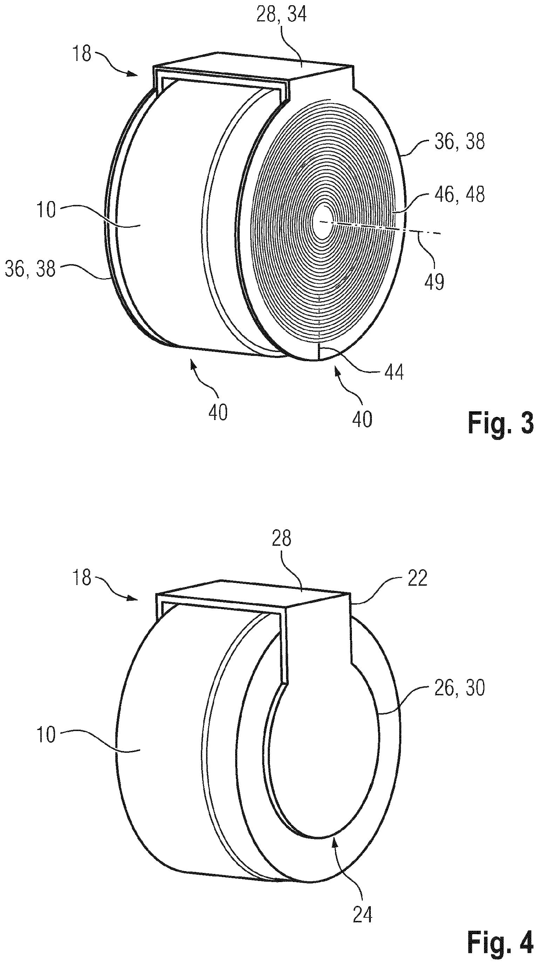

Wie insbesondere aus den Fig. 3 bis 5 und 8 ersichtlich ist, ist die Antenne 18 im Montagezustand derart auf die (zylinderförmige) Batterie 10 aufgesetzt, dass die Antennenflächen 30 und 32 die beiden Stirnseiten der Batterie 10 dicht flankieren oder sogar an den Stirnseiten der Batterie 10 anliegen.

Wie den Fig. 3 und 5 entnehmbar ist, ist die Reflexionsfolie 36 dabei so dimensioniert, dass die Verbreiterungen 38 hinsichtlich ihrer Form und Größe ungefähr den Stirnseiten der Batterie 10 entsprechen. Die Spiralspule 48 ist wiederum derart dimensioniert, dass sie die von der zugehörigen Verbreiterung 38 der Reflexionsfolie 36 aufgespannte Fläche weitgehend ausnutzt.

Im Betrieb der Antenne 18 wird das von der Antennenwicklung 46 erzeugte Magnetfeld durch die gelochte Reflexionsfolie 36 so geformt, dass das Magnetfeld der Antenne 18 näherungsweise dem Magnetfeld einer Stabantenne mit einer dem Anstand zwischen den Antennenflächen 30 und 32 gleichenden Länge entspricht. Durch die Reflexionsfolie 36 und ein Metallgehäuse 54 der Batterie 10 wird dabei erzwungen, dass das Magnetfeld im Innenbereich zwischen den Antennenflächen 30 und 32 weitgehend im Inneren der Ferritfolie 22 verläuft. Das Metallgehäuse 54 der Batterie 10 wirkt insofern als innenseitige magnetische Reflexionsschicht, die einerseits den von der Antenne 18 umschlossenen Innenraum magnetisch abschirmt und andererseits die Performanz der Antenne 18 erhöht.

Um bei gegebenem Bauraum (und dadurch beschränkter Größe) die Performanz der Antenne 18 weiter erhöhen, werden in weiteren Ausführungen der Antenne 18 eine oder mehrere weitere Spiralspulen zu der Antennenwicklung 46 hinzugefügt.

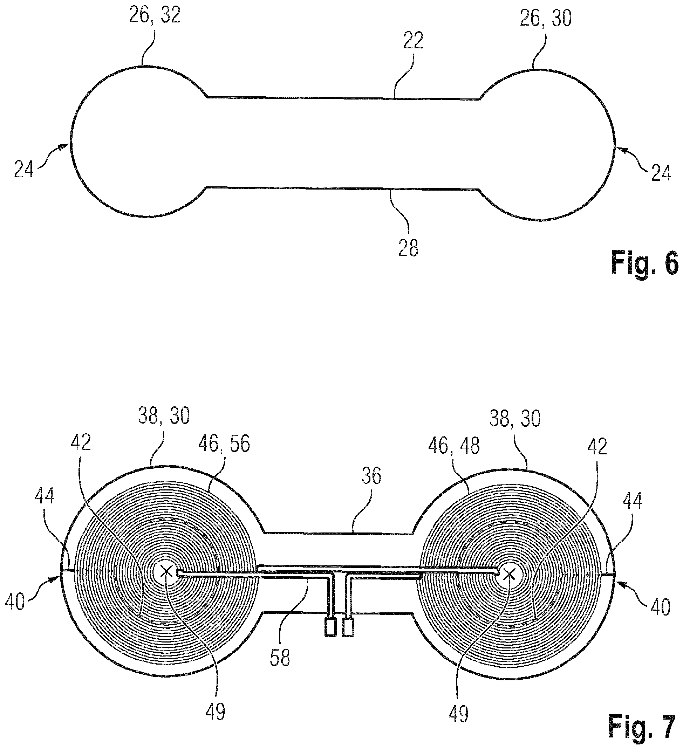

So ist anhand von Fig. 7, die die Reflexionsfolie 36 mit der darauf aufgebrachten Antennenwicklung 46 in aufgefaltetem Zustand darstellt, eine Ausführungsform der Antenne 18 gezeigt, bei der die Antennenwicklung 46 zusätzlich zu der Spiralspule 48 eine weitere einlagige Spiralspule 56 umfasst. Diese weitere Spiralspule 56 ist dabei an der anderen Antennenfläche 32 angebracht. Die Antenne 18 ist in dieser Ausführungsform bezüglich der Form der Ferritschicht 22 und der Reflexionsschicht 36 sowie bezüglich des Aufbaus (insbesondere bezüglich der Anordnung der beiden Spiralspulen 48 und 56) symmetrisch gestaltet, so dass die beiden Spiralspulen 48 und 56 in dem (gefalteten) Montagezustand der Antenne 18 bezüglich ihrer Spulenachsen 49 koaxial zueinander angeordnet sind. Die Spulenachse 49 der Spiralspule 56 ist dabei ebenfalls senkrecht zu der Flächenausdehnung der Ferritfolie 22 (und somit senkrecht zu der Antennenfläche 32) ausgerichtet.

In der Ausführung gemäß Fig. 7 sind die beiden Spiralspulen 48 und 56 an eine gemeinsame elektrische Zuleitung 58 angeschlossen und hierbei elektrisch in Reihe geschaltet. In einer alternativen Ausführung sind die beiden Spulen 48 und 56 dagegen separat voneinander mit dem Sende-/Empfangsschaltkreis 20 verbunden und können im Betrieb der Antenne 18, je nach Bedarf, einzeln zu- und abgeschaltet oder in sonstiger Weise unabhängig voneinander angesteuert werden. In einer Ausführungsform der Antenne 18 ist nur die Signalspule 48 mit dem Sende-/Empfangsschaltkreis 20 verbunden, während die Signalspule 56 als Ladespule mit der hier vorhandenen Ladesteuerung des Hörgeräts 2 verbunden ist.

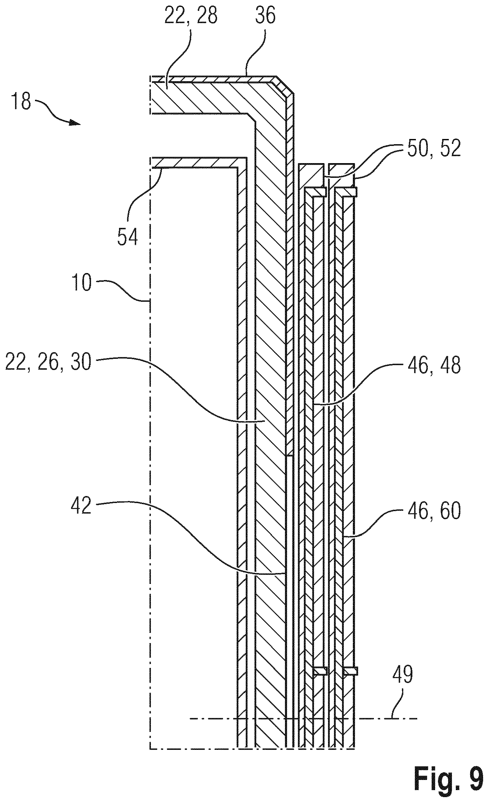

In einer weiteren Ausführungsform der Antenne 18 umfasst die Antennenwicklung 46 zusätzlich zu der Spiralspule 48 ebenfalls eine weitere einlagige Spiralspule 60 umfasst, wobei diese weitere Spiralspule 60 aber gemäß Fig. 9 zusammen mit der Spiralspule 48 an der Antennenfläche 30 angebracht ist. Die Spiralspule 60 ist hierbei vorzugsweise unmittelbar auf der Spiralspule 48 angebracht, insbesondere auf die letztere aufgeklebt. Die beiden Spiralspulen 48 und 60 sind dabei vorzugsweise derart zueinander angeordnet, dass sie bezüglich ihrer Spulenachsen 49 koaxial zueinander angeordnet sind.

Auch in der Ausführung gemäß Fig. 9 sind die beiden Spiralspulen 48 und 60 vorzugsweise elektrisch in Reihe geschaltet und somit gemeinsam angesteuert. Die beiden einlagigen Spiralspulen 48 und 60 bilden somit zusammen eine mehrlagige Spule. Alternativ hierzu können die beiden Spulen 48 und 60 im Rahmen der Erfindung wiederum separat voneinander angesteuert sein.

Um die Performanz der Antenne 18 noch weiter zu erhöhen, werden den beiden Spiralspulen 48 und 56 bzw. 48 und 60 bei Bedarf weitere Spiralspulen hinzugefügt, die wahlweise an der Antennenfläche 30 und/oder an der Antennenfläche 32 angeordnet werden können.

Die Spiralspulen 48 und 56 bz. 48 und 60 sowie ggf. weitere Spiralspulen sind vorzugsweise baugleich hergestellt und liegen somit insbesondere jeweils in Form einer kostengünstig herstellbaren und einfach handhabbaren Wicklungsfolie 52 vor. Allerdings kann die Antennenwicklung 46 auch (insbesondere hinsichtlich der Windungszahl und des Durchmessers) unterschiedlich gestaltete Spulen umfassen.

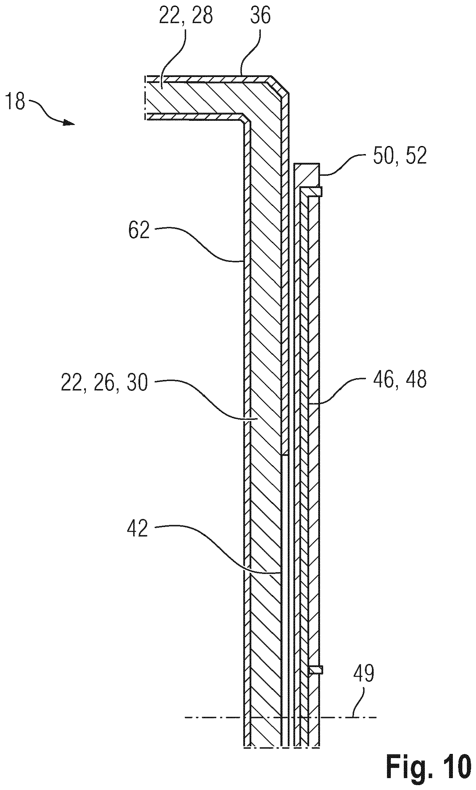

In einer weiteren Ausführungsform umfasst die Antenne 18 gemäß Fig. 10 als zweite Reflexionsschicht eine weitere Reflexionsfolie 62, die innenseitig auf die Ferritfolie 22 aufgebracht ist. Diese weitere Reflexionsfolie 62 hat vorzugsweise eine der Reflexionsfolie 36 entsprechende Form (allerdings ohne die Aussparungen 42 und die Schlitze 44) und wird in Deckung mit der Reflexionsfolie 36 angeordnet, so dass die Reflexionsfolien 36 und 62 die Ferritfolie 22 sandwichartig einhüllen. Die Reflexionsfolie 62 ist vorzugsweise analog zu der Reflexionsfolie 36 durch eine Metallfolie aus Kupfer oder Aluminium gebildet und mit der Ferritfolie 22 und der Reflexionsfolie 36 vorzugsweise verklebt. Die innere Reflexionsfolie 62 verbessert die magnetische Abschirmung des von der Antenne 18 umschlossenen Innenraums und die Leitung des magnetischen Flusses im Inneren der Ferritfolie 22. Sie wird insbesondere dann vorgesehen, wenn in der Einbausituation der Antenne 18 in diesem Innenraum abweichend von Fig. 1 bis 5 magnetisch störanfällige Komponenten angeordnet sind, die selbst nicht hinreichend magnetisch abgeschirmt sind.

Die Reflexionsfolie 62 kann auch vorgesehen werden, um eine Erwärmung von metallischen Körpern im Innenraum der Antenne 18 (z.B. des Metallgehäuses 54 der Batterie 10) infolge von Wirbelströmen zu verhindern.

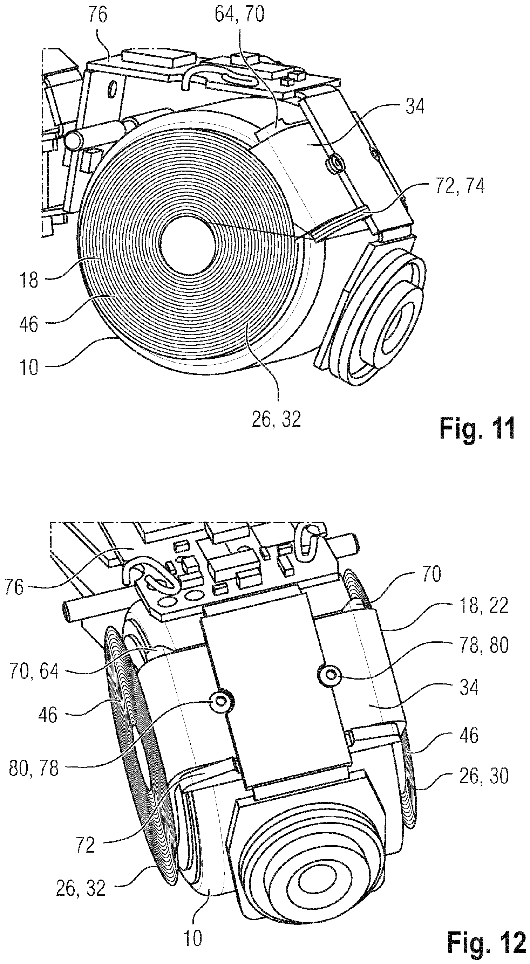

In den Fig. 11 bis 13 ist ein weiteres Ausführungsbeispiel der Antenne 18 dargestellt. In diesem Ausführungsbeispiel umfasst die Antenne 18 zusätzlich einen durch ein Kunststoff-Spritzgießteil gebildeten Führungskörper 64. Der Führungskörper 64 ist im montierten Zustand der Antenne 18 zwischen der Basis 34 und der Batterie 10 angeordnet. An seiner der Batterie 10 zugewandten Innenseite 66 ist der Führungskörper 64 mit einer Form versehen, die zumindest näherungsweise komplementär zu der Umfangskontur der Batterie 10 ausgebildet ist. Mit dieser Innenseite 66 ist der Führungskörper 64 passgenau auf den Umfang der Batterie 10 aufgesetzt. Gegenüberliegend zu der Innenseite 66 weist der Führungskörper 64 eine Führungsfläche 68 auf, mit der der Führungskörper 64 an der Basis 34 anliegt. Die Führungsfläche 68 wird von beiden Seiten von Vorsprüngen 70 und 72 flankiert, die die Basis 34 zwischen sich formschlüssig halten und somit zentrieren. Die Vorsprünge 72 sind zudem mit Konturen versehen, die elektrische Zuleitungen 74 der Antennenwicklung 46 zu einer Leiterplatte 76 führen. Zur zusätzlichen Fixierung und Zentrierung der Basis 34 (und damit der beiden Antennenflächen 30 und 32) ist der Führungskörper 64 mit zwei von der Führungsfläche 68 abstehenden Führungsstiften 78 versehen, die durch korrespondierende Löcher 80 der Basis hindurchstehen.

Zur Montage der Antenne 18 wird zunächst die Basis 34 (z.B. durch Verkleben) mit dem Führungskörper 64 verbunden. Der Führungskörper 64 wird dann auf den Umfang der Batterie 10 aufgesetzt. Anschließend werden die beiden Antennenflächen 30 und 32 beidseitig um die Batterie 10 geklappt und optional an dieser (z.B. wiederum durch Verkleben) fixiert.

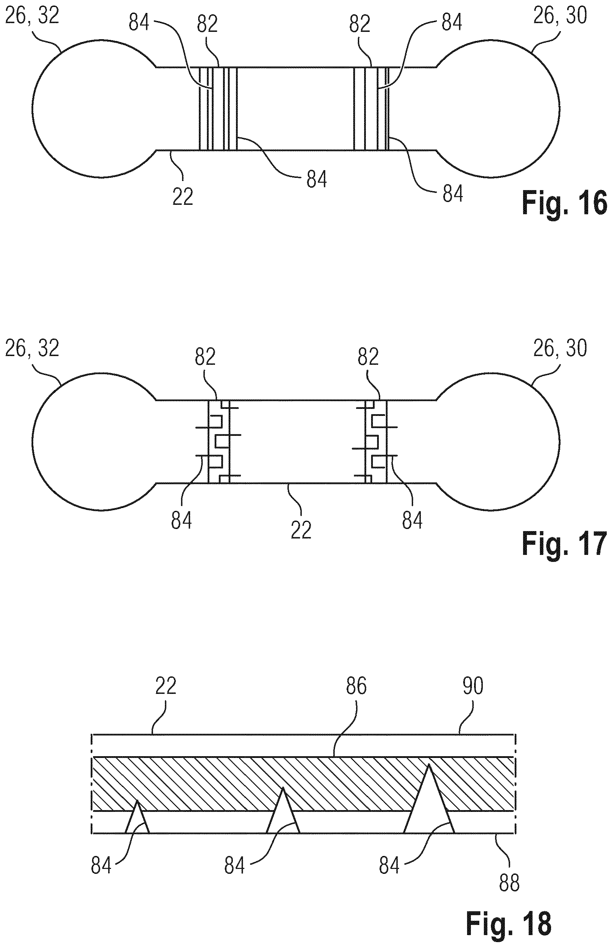

Um die Reproduzierbarkeit des Faltprozesses, in dem die beiden Antennenflächen 30 und 32 von der Basis 34 abgewinkelt werden, zu erhöhen und insbesondere unregelmäßige, irreproduzierbare Brüche der Ferritschicht 86 (Fig. 18) der Ferritfolie 22 zu vermeiden oder zumindest klein zu halten, ist der Führungskörper 64 in denjenigen Bereichen der Führungsfläche 68, an denen die Basis 34 in die abgewinkelten Antennenflächen 30 und 32 übergeht (d.h. jeweils im Bereich der stirnseitigen Kanten der Basis 34) mit einem (zylindrisch) konvex gekrümmten Führungsradius 81 versehen, über den die Ferritfolie 22 geführt ist.

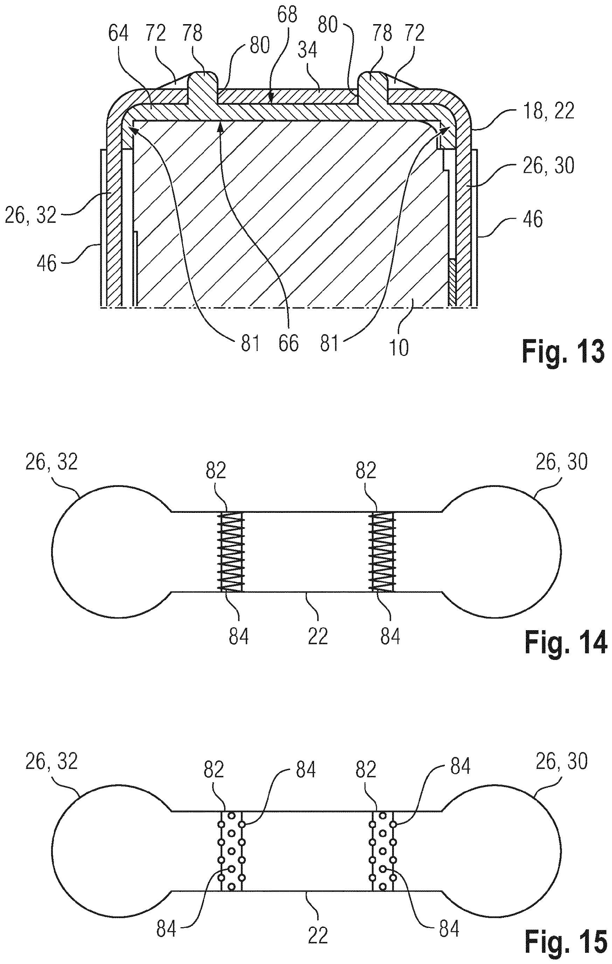

In jedem dieser Knick- oder Krümmungsbereiche, in denen die Basis 34 in die abgewinkelten Antennenflächen 30 und 32 übergeht, ist die Ferritfolie 22 gemäß den in Fig. 14 bis 17 dargestellten Ausführungsbeispielen jeweils mit einer Sollbiegestelle 82 versehen. Die Sollbiegestellen 82 sind dadurch hergestellt, dass durch Materialabtrag mittels Laserstrahlung (Laser-Cutting) punkt- oder linienförmige Vertiefungen 84 in die Ferritfolie 22 eingebracht werden, die die Ferritfolie 22 lokal schwächen, aber vorzugsweise nicht vollständig durchdringen. Die Fig. 14 bis 17 zeigen verschiedene Ausführungsformen dieser Vertiefungen 84:
- Gemäß Fig. 14 ist an jeder Sollbiegestelle 82 jeweils eine gezackte, linienförmige Vertiefung 84 vorgesehen.
- Gemäß Fig. 15 ist an jeder Sollbiegestelle 82 jeweils ein gleichmäßiges Muster von punktförmigen Vertiefungen 84 vorgesehen.
- Gemäß Fig. 16 sind an jeder Sollbiegestelle 82 mehrere Vertiefungen 84 in Form gerader Linien vorgesehen, die sich in Querrichtung über die Ferritfolie 22 erstrecken.
- Gemäß Fig. 17 sind an jeder Sollbiegestelle 82 mehrere unregelmäßige, linienförmige Vertiefungen 84 vorgesehen, die etwa jeweils die Form eines Buchstaben "U" mit zwei ungleich langen Schenkeln aufweisen.

In Fig. 18 ist die Querschnittsform der Vertiefungen 84 anhand eines grob schematischen Querschnitts durch die Ferritfolie 22 veranschaulicht. Aus der Darstellung ist zunächst erkennbar, dass die Ferritfolie 22 eine zentrale Ferritschicht 86 aufweist, die sandwichartig von beiden Seiten von jeweils einer Kunststoffschicht 88 und 90 (z.B. aus Polyethylenterephthalat, PET) flankiert wird. Anhand von drei in Fig. 18 eingezeichneten Vertiefungen 84 ist verdeutlicht, dass die in Fig. 14 bis 17 gezeigten Vertiefungen 84 jeweils mit unterschiedlicher Tiefe ausgeführt sein können. In einer ersten Ausführungsvariante (in Fig. 18 links) durchdringt die Vertiefung 84 im Wesentlichen nur die Kunststoffschicht 88, während die Ferritschicht 86 nicht berührt oder lediglich angekratzt wird. In einer zweiten Ausführungsvariante (in Fig. 18 mittig) dringt die Vertiefung 84 tief, insbesondere etwa um 50% ihrer Schichtdicke in die Ferritschicht 22 ein. In einer dritten Ausführungsvariante (in Fig. 18 rechts) durchdringt die Vertiefung 84 neben der Kunststoffschicht 88 auch die Ferritschicht 22 vollständig oder zumindest nahezu, so dass lediglich die Kunststoffschicht 90 nicht berührt oder lediglich angekratzt wird. Die drei vorstehend beschriebenen Ausführungen der Vertiefungen 84 spannen einen kontinuierlichen Gestaltungsbereich auf, innerhalb dessen die Vertiefungen 84 bei den in Fig. 14 bis 17 gezeigten Ferritfolien 22 variiert werden können. Zudem können an ein und derselben Ferritfolie 22 auch mehrere unterschiedlich tiefe Vertiefungen 84 oder (linienförmige) Vertiefungen 84 mit variierender Tiefe vorgesehen sein.

Bei den in den Fig. 14 bis 18 gezeigten Ferritfolien 22 sind die Vertiefungen 84 an der der Batterie 10 zugewandten Innenseite der Ferritfolie 22 eingebracht. Die Vertiefungen 84 liegen somit in dem abgewinkelten Zustand der Ferritfolie 22 auf der konkaven Seite der Knickstellen und werden beim Biegen der magnetischen Folie ganz oder zumindest teilweise durch das Material der Ferritfolie 22 wieder zusammengeschoben. Durch die Sollbiegestellen 82 werden unregelmäßige Brüche der Ferritschicht 86 vermieden.

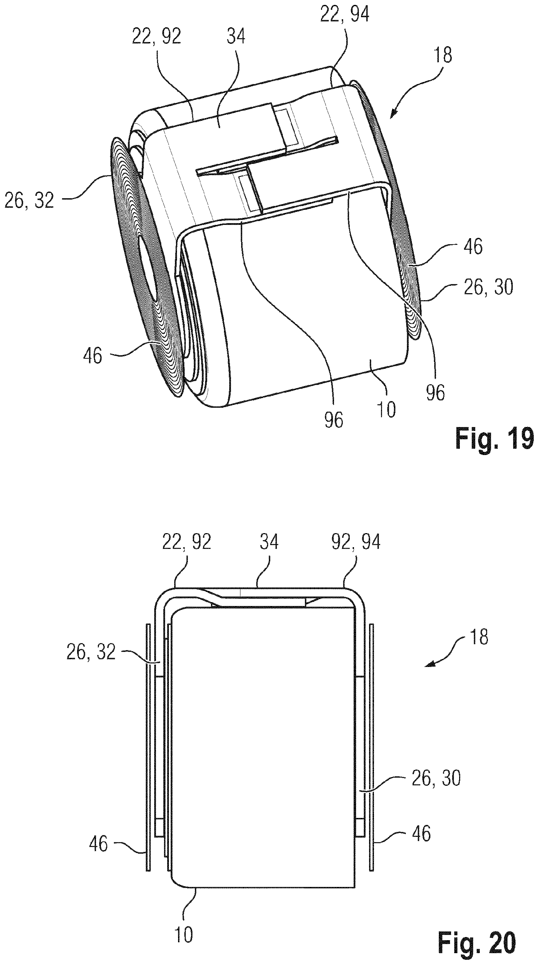

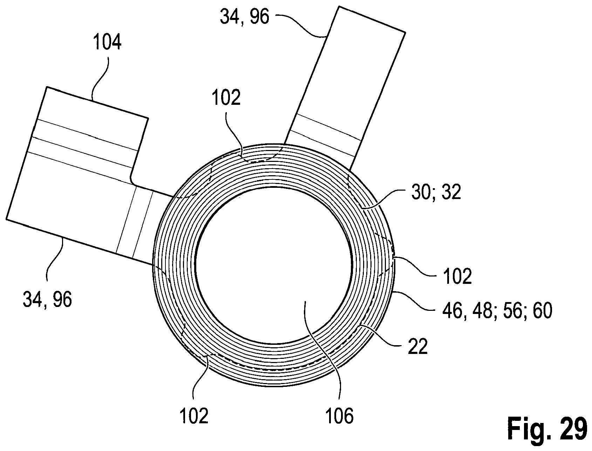

Während bei den vorstehend beschriebenen Ausführungsformen der Antenne 18 die Antennenflächen 30, 32 und die Basis 34 stets aus einem einstückigen Zuschnitt der Ferritfolie 22 gebildet waren, sind bei den im Folgenden anhand der Fig. 19 bis 29 beschriebenen Beispielen die Antennenflächen 30, 32 und die Basis 34 jeweils aus zwei Folienzuschnitten 92 und 94 der Ferritfolie 22 zusammengesetzt. Jeder der beiden Folienzuschnitte 92, 94 weist dabei jeweils eine der beiden Antennenflächen 30, 32 sowie mindestens eine von dem Rand der jeweiligen Antennenfläche 30, 32 (insbesondere radial) abragende Lasche 96 auf. Zur Bildung der Basis 34 werden hierbei jeweils die oder eine von gegebenenfalls mehreren Laschen 96 eines der beiden Folienzuschnitte 92, 94 überlappend auf eine (jeweils) korrespondierende Lasche 96 des anderen Folienzuschnitts 94 bzw. 92 gelegt.

In einer (nicht näher dargestellten) Ausführungsform der Antenne 18 ragt von jeder der Antennenflächen 30, 32 jeweils eine einzige Lasche 96 ab. Die übereinandergelegten Laschen 96 der beiden Folienzuschnitte 92, 94 bilden dabei - ähnlich den Ausführungsbeispielen gemäß Fig. 2 bis 18 - eine einsträngig zusammenhängende Variante der Basis 34.

Abweichend hiervon ragt in einer Ausführungsform der Antenne 18 gemäß der Fig. 19 bis 21 von jeder der Antennenflächen 30, 32 eine Lasche 96 ab, die sich im Bereich der Basis 34 in zwei Zweige 98, 100 verzweigt. Die abwechselnd übereinandergelegten Zweigen 98, 100 der Laschen 96 der beiden Folienzuschnitte 92, 94 bilden dabei eine zweisträngige Variante der Basis 34. In der Darstellung gemäß Fig. 19 und 20 ist die Antennenwicklung 46 - wie vorstehend beschrieben - über die (hier nicht dargestellte) Reflexionsfolie 36 mittelbar an den Antennenflächen 30 bzw. 32 fixiert.

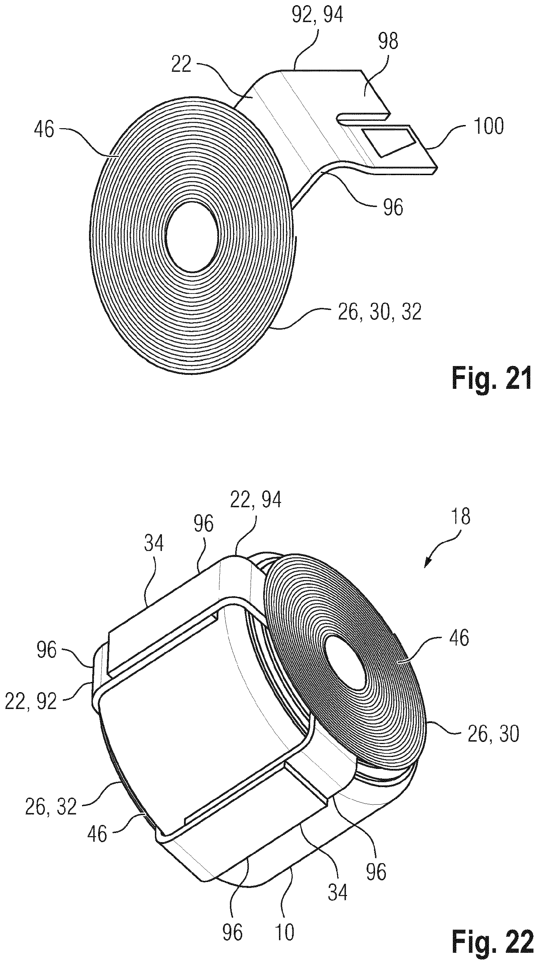

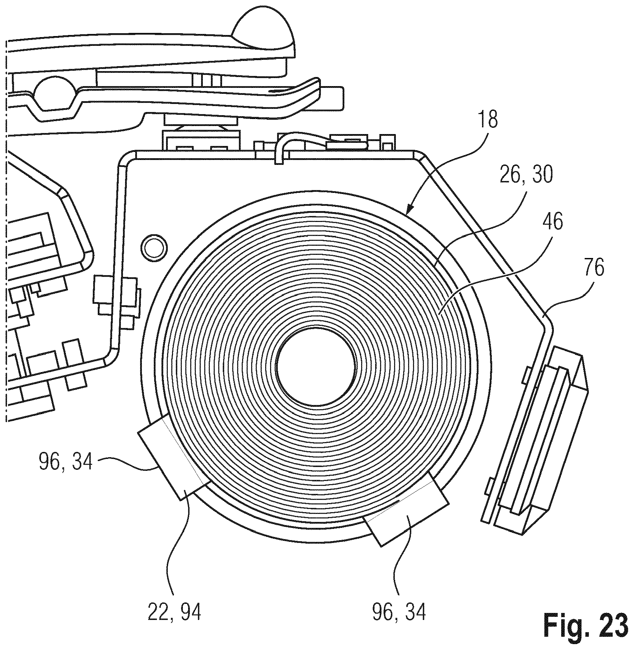

In einem weiteren Ausführungsbeispiel gemäß Fig. 22 und 23 ragen jeweils zwei Laschen 96 radial von jeder der Antennenflächen 30 und 32 ab, wobei jeweils zwei dieser Laschen 96 wiederum in abwechselnder Reihenfolge zur Bildung einer wiederum zweisträngigen Variante der Basis 34 übereinandergelegt sind. Die Laschen 96 sind hierbei derart um den Umfang der Antennenflächen 30, 32 verteilt angeordnet, dass beiden Stränge der Basis 34 im Verhältnis zu ihrer jeweiligen Breite weit voneinander beabstandet sind; konkret beträgt der Abstand zwischen den beiden Strängen der Basis 34 hier zum Beispiel etwa das Dreifache der Breite des einzelnen Stranges. In Blickrichtung auf die Antennenfläche 30 gesehen ragen die beiden Stränge der Basis 34 etwa in einem Winkel von 90° zueinander von der Antennenfläche 30 ab, wodurch sich eine besonders gute magnetische Kopplung zwischen den Antennenflächen 30 und 32 ergibt.

Weiterhin sind die beiden Stränge der Basis 34 im Beispiel gemäß Fig. 22 und 23 an der von der Leiterplatte 76 abgewandten Seite der Batterie 10 angeordnet. Dies kann - je nach Anordnung der Komponenten im Inneren des Hörgeräts 2 - bauraumtechnisch vorteilhaft sein.

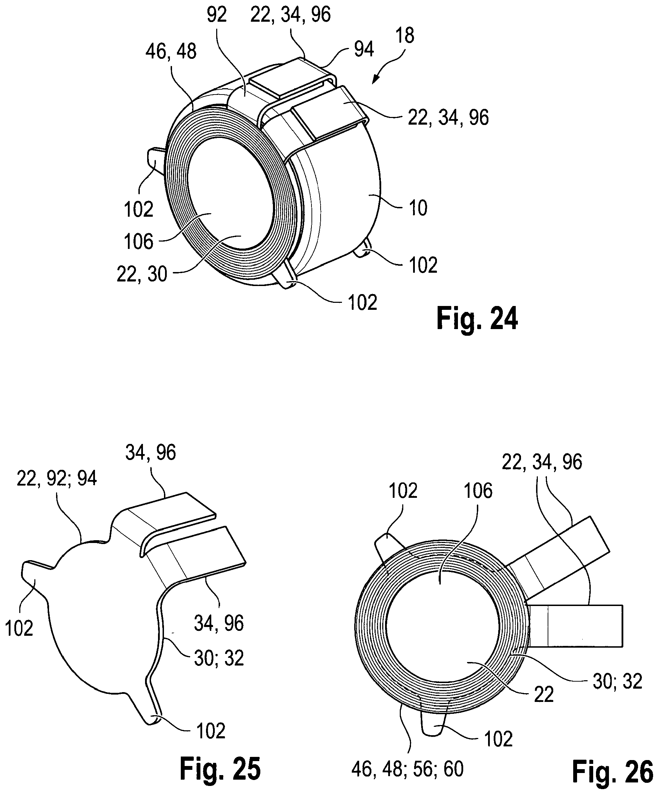

Alternativ können die beiden Stränge der Basis 34 aber auch, wie an dem Beispiel gemäß Fig. 24 bis 26 gezeigt ist, dicht benachbart nebeneinander angeordnet sein, so dass der Abstand zwischen den beiden Strängen kleiner oder etwa gleich der Breite eines jeden Stranges ist.

An dem Beispiel gemäß Fig. 24 bis 26 ist weiterhin zu erkennen, dass vorzugsweise die Spiralspule 48 derart gestaltet ist, dass ihr Außendurchmesser größer ist als der Außendurchmesser der zugeordneten Antennenfläche 30, und dass somit die Spiralspule 48 die zugeordnete Antennenfläche 30 seitlich überragt; gleiches gilt, wenn vorhanden, für die weiteren Spiralspulen 56 und 60 . Zur Stabilisierung der Spiralspule 48 aus dem der Rand der Antennenfläche 30 hier zwei Radialstege 102 ausgeformt. Mit entsprechenden Radialstegen ist hier auch die zweite Antennenfläche 32 versehen. Die Radialstege 102 sind hierbei derart dimensioniert, dass sie die Spiralspule 48 (und, soweit vorhanden, die Spiralspulen 56 und 60) in Radialrichtung überragen.

In dieser Ausführung dienen die Radialstege 102 auch zur Fixierung der Antenne 18 an einem (nicht dargestellten) Elektronikrahmen des Hörgeräts 2.

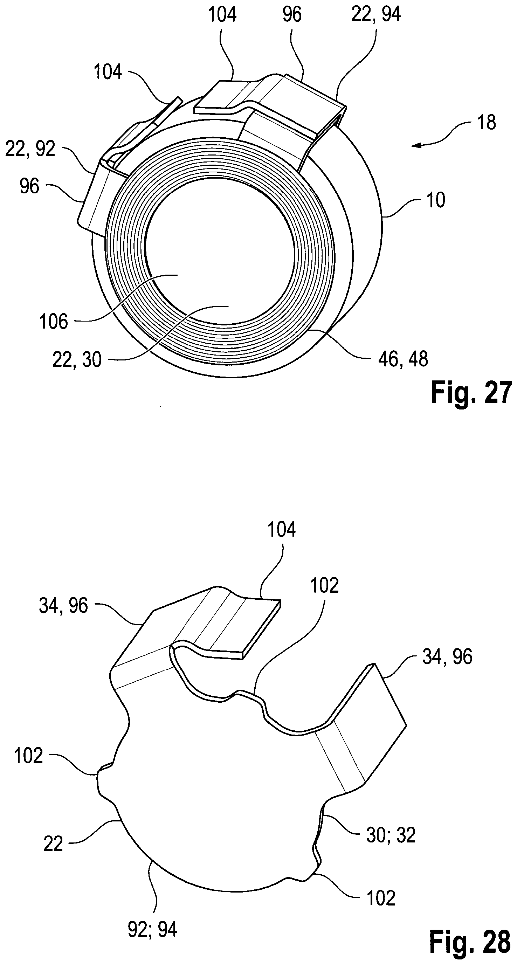

Die in den Fig. 27 bis 29 gezeigte Ausführungsform der Antenne 18 unterscheidet sich von den beiden vorstehend beschriebenen Ausführungsbeispielen insbesondere dadurch, dass bei jedem der beiden Folienzuschnitte 92, 94 jeweils eine der beiden Laschen 96 an einer Seite durch eine zusätzliche Fahne 104 verbreitert ist. Durch die beiden Fahnen 104 wird eine verbesserte Anlage der Antenne 18 an dem im Innenraum der der Antenne 18 aufgenommenen Bauteil, im Beispiel also der Batterie 10, erzielt.

Bei den Beispielen gemäß Fig. 24 bis 29 sind die Spiralspule 48 und - soweit vorhanden - die Spiralspulen 56 und 60 jeweils als Luftspule ausgebildet. Dabei sind mehrere Windungen eines lackisolierten Wicklungsdrahts unmittelbar aufeinandergewickelt und mittels des Isolierlacks miteinander verbacken. Die Spiralspule 48 ist dabei unmittelbar, d.h. ohne zwischengeordnete Trägerfolie 50 oder Reflexionsfolie 36 auf der Antennenfläche 30 fixiert, insbesondere aufgeklebt; in entsprechender Weise sind gegebenenfalls auch die Spiralspulen 56, 60 auf der Antennenfläche 32 bzw. der Spiralspule 48 fixiert.

Bei den Beispielen gemäß Fig. 24 bis 29 umschließend die Spiralspule 48 und - soweit vorhanden - die Spiralspulen 56 und 60 zudem jeweils einen vergleichsweise großen windungsfreien Freiraum 106, dessen Durchmesser dieses Freiraums etwa 60 % des Außendurchmessers der jeweiligen Spiralspule 48, 56, 60 einnimmt.

Bei den in den Fig. 19 bis 29 gezeigten Ausführungsbeispielen der Antenne 18 sind die beiden Folienzuschnitte 92 und 94 vorzugsweise als identische Teile gefertigt. Hierdurch wird eine besonders rationelle Fertigung erzielt.

Weiterhin ist bei den in den Fig. 19 bis 29 gezeigten Ausführungsbeispielen der Antenne 18 an aufeinanderliegenden Flächen der Laschen 96 vorzugsweise jeweils eine der äußeren Kunststoffschichten der Ferritfolie 22 entfernt, so dass die Laschen 96 unmittelbar mit der Ferritschicht 86 aufeinanderliegen. Hierdurch wird die magnetische Kopplung zwischen den Antennenflächen 30 und 32 weiter verbessert.

Die Erfindung wird an den vorstehend beschriebenen Ausführungsbeispielen besonders deutlich, ist auf diese Ausführungsbeispiele aber keineswegs beschränkt. Vielmehr können weitere Ausführungsformen der Erfindung aus den Ansprüchen und der vorstehenden Beschreibung abgeleitet werden.

### Bezugszeichenl iste

- 2: Hörgerät
- 4: Gehäuse
- 6: Mikrofone
- 8: Hörer
- 10: Batterie
- 12: Signalprozessor
- 14: Schallkanal
- 16: Spitze
- 18: Antenne
- 20: Sende-/Empfangsschaltkreis
- 22: Ferritfolie
- 24: Längsende
- 26: Verbreiterung
- 28: Verbindungsabschnitt
- 30: Antennenfläche
- 32: Antennenfläche
- 34: Basis
- 36: Reflexionsfolie
- 38: Verbreiterung
- 40: Längsende
- 42: Aussparung
- 44: Schlitz
- 46: Antennenwicklung
- 48: Spiralspule
- 49: Spulenachse
- 50: Trägerfolie
- 52: Wicklungsfolie
- 54: Metallgehäuse
- 56: Spiralspule
- 58: Zuleitung
- 60: Spiralspule
- 62: Reflexionsfolie
- 64: Führungskörper
- 66: Innenseite
- 68: Führungsfläche
- 70: Vorsprung
- 72: Vorsprung
- 74: Zuleitung
- 76: Leiterplatte
- 78: Führungsstift
- 80: Loch
- 81: Führungsradius
- 82: Sollbiegestelle
- 84: Vertiefung
- 86: Ferritschicht
- 88: Kunststoffschicht
- 90: Kunststoffschicht
- 92: Folienzuschnitt
- 94: Folienzuschnitt
- 96: Lasche
- 98: Zweig
- 100: Zweig
- 102: Radialsteg
- 104: Fahne
- 106: Freiraum

- I: (Eingangs-)Audiosignal
- O: Ausgangs-Audiosignal
- U: Versorgungsspannung

## Patentansprüche

1. Magnetisch-induktive Antenne (18), für ein Hörinstrument (2),
- mit einer ersten Antennenfläche (30) und einer zweiten Antennenfläche (32), die jeweils aus magnetischer, flexibler Folie (22) gebildet sind,
- mit einer aus einem magnetischen Material gebildeten oder eine magnetische Schicht (22) umfassenden Basis (34), die die beiden Antennenflächen (30,32) miteinander verbindet, wobei die beiden Antennenflächen (30,32) von der Basis (34) in gleicher Richtung abgewinkelt sind, sowie
- mit einer Antennenwicklung (46),
**dadurch gekennzeichnet,**
**dass** die Antennenwicklung (46) mindestens eine erste einlagige Spiralspule (48) aufweist, die außenseitig an der ersten Antennenfläche (30) angeordnet, insbesondere angebracht ist, so dass eine Achse (49) der ersten Spiralspule (48) senkrecht bezüglich der ersten Antennenfläche (30) ausgerichtet ist.

2. Antenne (18) nach Anspruch 1,
mit einer zweiten einlagigen Spiralspule (56), die außenseitig an der zweiten Antennenfläche (32) anordnet, insbesondere angebracht ist, so dass eine Achse (49) dieser zweiten Spiralspule (56) senkrecht bezüglich der zweiten Antennenfläche (32) ausgerichtet ist.

3. Antenne (18) nach Anspruch 1 oder 2,
mit mindestens einer dritten einlagigen Spiralspule (60), die außenseitig und parallel zu der ersten Spiralspule (48) an der ersten Antennenfläche (30) anordnet, insbesondere angebracht ist.

4. Antenne (18) nach Anspruch 2 oder 3,
wobei die erste Spiralspule (48) und die zweite Spiralspule (56) bzw. dritte Spiralspule (60) unabhängig voneinander ansteuerbar sind.

5. Antenne (18) nach einem der Ansprüche 1 bis 4,
wobei die oder jede Spiralantenne (48, 56, 60) in RFID-Technologie, insbesondere durch Drucken, galvanische Abscheidung, Aufdampfen, Sputtern, Ätzen oder Einbetten eines Spulendrahtes auf einer Trägerfolie (50) erzeugt ist.

6. Antenne (18) nach einem der Ansprüche 1 bis 4,
wobei die oder jede Spiralantenne (48,56,60) durch eine Leiterbahn einer flexiblen Leiterplatte gebildet ist.

7. Antenne (18) nach einem der Ansprüche 1 bis 4,
wobei die oder jede Spiralantenne (48,56,60) als Luftspule mit mehreren unmittelbar aneinanderliegenden Windungen eines isolierten, insbesondere lackisolierten, Wicklungsdrahtes gebildet ist, wobei die Windungen durch eine Lackschicht aneinander fixiert sind.

8. Antenne (18) nach einem der Ansprüche 1 bis 7,
wobei die beiden Antennenflächen (30,32) und die Basis (34) durch einen einstückigen Folienzuschnitt der magnetischen Folie (22) gebildet sind.

9. Antenne (18) nach einem der Ansprüche 1 bis 7,
wobei die beiden Antennenflächen (30,32) und die Basis (34) durch zwei jeweils in den Bereich der Basis (34) hineinragende Folienzuschnitte der magnetischen Folie (22) gebildet sind.

10. Antenne (18) nach einem der Ansprüche 1 bis 9,
wobei die beiden Antennenflächen (30,32) jeweils gegenüber der Basis (34) verbreitet sind, insbesondere eine kreisförmige Verbreiterung (26) aufweisen.

11. Antenne (18) nach einem der Ansprüche 1 bis 10,
mit einer ersten magnetischen Reflexionsschicht (36) aus einem elektrisch leitenden Material mit geringer magnetischer Permeabilität, insbesondere aus Kupfer oder Aluminium, die jeweils außenseitig an der ersten Antennenfläche (30) und der zweiten Antennenfläche (32) angeordnet, insbesondere angebracht ist, so dass die erste Reflexionsschicht (36) der oder jeder Spiralspule (48,56,60) und der jeweils zugeordneten Antennenfläche (30,32) zwischengeordnet ist, wobei die erste Reflexionsschicht (36) im Bereich einer jeder der beiden Antennenflächen (30,32) jeweils eine Aussparung (42) aufweist, und wobei oder jede Spiralspule (48,56,60) im Bereich einer der beiden Aussparungen (42) angeordnet ist.

12. Antenne (18) nach Anspruch 11,
wobei die erste Reflexionsschicht (36) die Antennenflächen (30,32) seitlich überragt.

13. Antenne (18) nach Anspruch 11 oder 12,
wobei die erste Reflexionsschicht (36) auch die Basis (34) überdeckt.

14. Antenne (18) nach einem der Ansprüche 11 bis 13,
wobei die erste Reflexionsschicht (36) im Bereich einer jeden Antennenfläche (30,32) an der von der Basis (34) jeweils abgewandten Seite einen Schlitz (44) aufweist, der sich von der jeweiligen Aussparung (42) bis zum äußeren Rand der ersten Reflexionsschicht (36) erstreckt.

15. Antenne (18) nach einem der Ansprüche 1 bis 14,
mit einer zweiten magnetischen Reflexionsschicht (62) aus einem elektrisch leitenden Material mit geringer magnetischer Permeabilität, insbesondere aus Kupfer oder Aluminium, wobei die zweite magnetische Reflexionsschicht (62) jeweils innenseitig an der ersten Antennenfläche (30) und der zweiten Antennenfläche (32) angeordnet, insbesondere angebracht ist.

16. Hörinstrument (2) mit einer Antenne (18) nach einem der Ansprüche 1 bis 15.

17. Hörinstrument (2) nach Anspruch 16,
mit einem Funktionsbauteil, insbesondere einer Batterie (10) oder einem Hörer (8), wobei das Funktionsbauteil ein Gehäuse (54) aus einem elektrisch leitenden Material mit geringer magnetischer Permeabilität, insbesondere aus Kupfer, Aluminium oder einem Stahlblech, aufweist, und wobei die Antenne (18) derart auf das Funktionsbauteil aufgesetzt ist, dass das Gehäuse (54) die Antennenflächen (30,32) innenseitig flankiert.

## Claims

1. Magnetic-inductive antenna (18), for a hearing instrument (2),
- with a first antenna surface (30) and a second antenna surface (32), which are each formed from magnetic, flexible foil (22),
- with a base (34) formed from a magnetic material or comprising a magnetic layer (22), which connects the two antenna surfaces (30, 32) to each other, the two antenna surfaces (30, 32) being angled away from the base (34) in the same direction, and
- with an antenna winding (46),
**characterized in**
**that** the antenna winding (46) has at least one first single-layer spiral coil (48), which is arranged, in particular mounted, on the outside of the first antenna surface (30), so that an axis (49) of the first spiral coil (48) is aligned perpendicularly with respect to the first antenna surface (30).

2. Antenna (18) according to claim 1,
with a second single-layer spiral coil (56), which is arranged, in particular mounted, on the outside of the second antenna surface (32), so that an axis (49) of this second spiral coil (56) is aligned perpendicularly with respect to the second antenna surface (32).

3. Antenna (18) according to claim 1 or 2,
with at least one third single-layer spiral coil (60), which is arranged, in particular mounted, on the outside of and parallel to the first spiral coil (48) on the first antenna surface (30).

4. Antenna (18) according to claim 2 or 3,
wherein the first spiral coil (48) and the second spiral coil (56) or respectively third spiral coil (60) can be controlled independently of each another.

5. Antenna (18) according to one of claims 1 to 4,
wherein the or each spiral antenna (48, 56, 60) is produced using RFID technology, in particular by printing, galvanic deposition, vapor deposition, sputtering, etching or embedding a coil wire on a carrier foil (50).

6. Antenna (18) according to one of claims 1 to 4,
wherein the or each spiral antenna (48, 56, 60) is formed by a conductor track of a flexible printed circuit board.

7. Antenna (18) according to one of claims 1 to 4,
wherein the or each spiral antenna (48, 56, 60) is formed as an air coil with a plurality of directly adjacent windings of an insulated, in particular enamel-insulated, winding wire, the windings being fixed to each other by a layer of enamel.

8. Antenna (18) according to one of claims 1 to 7,
wherein the two antenna surfaces (30, 32) and the base (34) are formed by a one-piece foil blank of the magnetic foil (22).

9. Antenna (18) according to one of claims 1 to 7,
wherein the two antenna surfaces (30, 32) and the base (34) are formed by two foil blanks of the magnetic foil (22) each projecting into the region of the base (34).

10. Antenna (18) according to one of claims 1 to 9,
wherein the two antenna surfaces (30, 32) are each widened relative to the base (34), in particular have a circular widening (26).

11. Antenna (18) according to one of claims 1 to 10,
with a first magnetic reflection layer (36) made of an electrically conductive material with low magnetic permeability, in particular of copper or aluminum, which is arranged, in particular mounted, on the outside of the first antenna surface (30) and the second antenna surface (32) in each case, so that the first reflection layer (36) is arranged between the or each spiral coil (48,56,60) and the respectively associated antenna surface (30,32), wherein the first reflective layer (36) has a recess (42) in the region of each of the two antenna surfaces (30,32) at , and wherein or each spiral coil (48,56,60) is arranged in the region of one of the recesses (42).

12. Antenna (18) according to claim 11,
wherein the first reflective layer (36) projects laterally beyond the antenna surfaces (30, 32).

13. antenna (18) according to claim 11 or 12,
wherein the first reflective layer (36) also covers the base (34).

14. Antenna (18) according to one of claims 11 to 13,
wherein the first reflective layer (36) has a slit (44) in the region of each antenna surface (30, 32) on the side facing away from the base (34) in each case, which slit extends from the respective recess (42) to the outer edge of the first reflective layer (36).

15. Antenna (18) according to one of claims 1 to 14,
with a second magnetic reflection layer (62) made of an electrically conductive material with low magnetic permeability, in particular of copper or aluminum, the second magnetic reflection layer (62) being arranged, in particular attached, on the inside of the first antenna surface (30) and the second antenna surface (32).

16. Hearing instrument (2) comprising an antenna (18) according to one of claims 1 to 15.

17. Hearing instrument (2) according to claim 16,
with a functional component, in particular a battery (10) or a receiver (8), wherein the functional component has a housing (54) made of an electrically conductive material with low magnetic permeability, in particular of copper, aluminum or a sheet steel, and wherein the antenna (18) is placed on the functional component in such a way that the housing (54) flanks the antenna surfaces (30, 32) on the inside.

## Revendications

1. Antenne magnéto-inductive (18), pour un instrument auditif (2),
- avec une première surface d'antenne (30) et une deuxième surface d'antenne (32), chacune étant formée d'une feuille magnétique flexible (22),
- avec une base (34) formée d'un matériau magnétique ou comprenant une couche magnétique (22), qui relie entre elles les deux surfaces d'antenne (30, 32), les deux surfaces d'antenne (30, 32) étant coudées dans la même direction par rapport à la base (34), et
- avec un enroulement d'antenne (46),
**caractérisé en ce**
**que** l'enroulement d'antenne (46) comprend au moins une première bobine en spirale (48) à une seule couche, qui est disposée, en particulier montée, du côté extérieur sur la première surface d'antenne (30), de sorte qu'un axe (49) de la première bobine en spirale (48) est orienté perpendiculairement par rapport à la première surface d'antenne (30).

2. Antenne (18) selon la revendication 1,
avec une deuxième bobine en spirale (56) à une seule couche, qui est disposée, en particulier montée, du côté extérieur sur la deuxième surface d'antenne (32), de sorte qu'un axe (49) de ladite deuxième bobine en spirale (56) est orienté perpendiculairement par rapport à la deuxième surface d'antenne (32).

3. Antenne (18) selon la revendication 1 ou 2,
avec au moins une troisième bobine en spirale (60) à une seule couche, qui est disposée, en particulier montée, sur le côté extérieur et parallèlement à la première bobine en spirale (48) sur la première surface d'antenne (30).

4. Antenne (18) selon la revendication 2 ou 3,
dans lequel la première bobine en spirale (48) et la deuxième bobine en spirale (56) ou la troisième bobine en spirale (60) peuvent être commandées indépendamment l'une de l'autre.

5. Antenne (18) selon l'une des revendications 1 à 4,
dans lequel la ou chaque antenne en spirale (48, 56, 60) est produite en technologie RFID, en particulier par impression, électrodéposition, évaporation, pulvérisation, gravure ou incorporation d'un fil de bobine sur une feuille de support (50).

6. Antenne (18) selon l'une des revendications 1 à 4,
dans lequel la ou chaque antenne en spirale (48, 56, 60) est formée par une piste conductrice d'une carte de circuit imprimé flexible.

7. Antenne (18) selon l'une des revendications 1 à 4,
dans lequel la ou chaque antenne en spirale (48, 56, 60) est formée comme une bobine à air avec plusieurs spires directement adjacentes d'un fil d'enroulement isolé, en particulier isolé par un vernis, les spires étant fixées les unes aux autres par une couche de vernis.

8. Antenne (18) selon l'une des revendications 1 à 7,
dans lequel les deux surfaces d'antenne (30, 32) et la base (34) sont formées par une découpe de film monobloc du film magnétique (22).

9. Antenne (18) selon l'une des revendications 1 à 7,
dans lequel les deux surfaces d'antenne (30, 32) et la base (34) sont formées par deux découpes de film de la feuille magnétique (22) pénétrant respectivement dans la zone de la base (34).

10. Antenne (18) selon l'une des revendications 1 à 9,
dans lequel les deux surfaces d'antenne (30, 32) sont respectivement élargies par rapport à la base (34), en particulier comprenant un élargissement circulaire (26).

11. Antenne (18) selon l'une des revendications 1 à 10,
avec une première couche de réflexion magnétique (36) en un matériau électriquement conducteur à faible perméabilité magnétique, en particulier en cuivre ou en aluminium, qui est disposée, en particulier appliquée, respectivement sur le côté extérieur de la première surface d'antenne (30) et de la deuxième surface d'antenne (32), de sorte que la première couche de réflexion (36) de la ou de chaque bobine spirale (48,56, 60) et la surface d'antenne (30, 32) respectivement associée, la première couche de réflexion (36) comprenant respectivement un évidement (42) dans la zone de chacune des deux surfaces d'antenne (30, 32) , et la ou chaque bobine en spirale (48, 56, 60) étant disposée dans la zone de l'un des évidements (42) chez .

12. Antenne (18) selon la revendication 11,
dans lequel la première couche de réflexion (36) dépasse latéralement les surfaces d'antenne (30, 32).

13. Antenne (18) selon la revendication 11 ou 12,
dans lequel la première couche réfléchissante (36) recouvre également la base (34).

14. Antenne (18) selon l'une des revendications 11 à 13,
dans lequel la première couche réfléchissante (36) comprend, dans la zone de chaque surface d'antenne (30, 32), sur le côté respectivement opposé à la base (34), une fente (44), qui s'étend de l'évidement respectif (42) jusqu'au bord extérieur de la première couche réfléchissante (36).

15. Antenne (18) selon l'une des revendications 1 à 14,
avec une deuxième couche de réflexion magnétique (62) en un matériau électriquement conducteur à faible perméabilité magnétique, en particulier en cuivre ou en aluminium, la deuxième couche de réflexion magnétique (62) étant disposée, en particulier appliquée, respectivement du côté intérieur sur la première surface d'antenne (30) et la deuxième surface d'antenne (32).

16. Instrument auditif (2) comprenant une antenne (18) selon l'une des revendications 1 à 15.

17. Instrument auditif (2) selon la revendication 16,
avec un composant fonctionnel, en particulier une batterie (10) ou un récepteur (8), le composant fonctionnel comprenant un boîtier (54) en un matériau électriquement conducteur à faible perméabilité magnétique, en particulier en cuivre, en aluminium ou en tôle d'acier, et l'antenne (18) étant posée sur le composant fonctionnel de telle sorte que le boîtier (54) flanque les surfaces d'antenne (30, 32) du côté intérieur.
